# EUROPEAN PATENT APPLICATION

(11) **EP 4 797 771 A1**
(43) Date of publication of application: **26.08.2026**
(21) Application number: 24887469.5
(22) Date of filing: 19.07.2024
(51) Int. Cl.: H04W 24/02

(54) **MULTI-NODE JOINT SENSING METHOD AND COMMUNICATION DEVICE**

(30) Priority: 08.11.2023 CN 202311490776
(71) Applicant: HUAWEI TECHNOLOGIES CO., LTD., Shenzhen 518129 (CN)
(72) Inventor: YU, Yang, Shenzhen, Guangdong 518129 (CN); LUO, Jiajin, Shenzhen, Guangdong 518129 (CN)
(74) Representative: Isarpatent
(86) International application number: PCT/CN2024/106591
(87) International publication number: WO 2025/097845

(57) **Abstract**

A multi-node joint sensing method and a communication apparatus are disclosed, relating to the field of sensing communication, to provide a high-quality sensing service. The method includes: obtaining first information, and determining, based on the first information, whether a first sensing link is a sensing link matching a first sensed point. The first information indicates a first receiving measurement node to request to determine whether the first sensing link is a sensing link matching the first sensed point, the first sensing link is a sensing link including a first sending measurement node and the first receiving measurement node, the first sensing link is one of K sensing links, the K sensing links include N sending measurement nodes and M receiving measurement nodes, K is less than or equal to N×M or K is equal to M, and N is an integer greater than 1 and M is a positive integer, or N is a positive integer and M is an integer greater than 1, or N=M and is an integer greater than 1.

## Description

This application claims priority to Chinese Patent Application No. 202311490776.1, filed with the China National Intellectual Property Administration on November 8, 2023 and entitled "MULTI-NODE JOINT SENSING METHOD AND COMMUNICATION APPARATUS", which is incorporated herein by reference in its entirety.

### TECHNICAL FIELD

This application relates to the field of sensing communication, and in particular, to a multi-node joint sensing method and a communication apparatus.

### BACKGROUND

In a communication system, a terminal device may report a measurement report to trigger an access network device to perform handover, so as to obtain a high-quality communication service. In an integrated sensing and communication (integrated sensing and communication, ISAC) scenario, a plurality of measurement nodes may jointly provide a high-quality sensing service. However, because a sensed object may be passive, it may be impossible for the sensed object to send a measurement report, as a terminal device does in a communication service, to initiate change of a measurement node that provides a sensing service. In this case, how to jointly provide a high-quality sensing service by a plurality of measurement nodes remains unclear.

### SUMMARY

Embodiments of this application provide a multi-node joint sensing method and a communication apparatus, to provide a high-quality sensing service.

To achieve the foregoing objective, this application uses the following technical solutions.

According to a first aspect, a multi-node joint sensing method is provided. The method may be performed by a compute node, or may be performed by a component of a compute node, for example, a processor, a chip, or a chip system of the compute node, or may be implemented by a logical module or software that can implement all or a part of functions of compute nodes. The method includes: obtaining first information, where the first information indicates a first receiving measurement node to request to determine whether a first sensing link is a sensing link matching a first sensed point, the first sensing link is a sensing link including a first sending measurement node and the first receiving measurement node, the first sensing link is one of K sensing links, the K sensing links include N sending measurement nodes and M receiving measurement nodes; and determining, based on the first information, whether to switch the first sensing link for measuring the first sensed point. K is less than or equal to N×M or K is equal to M, and N is an integer greater than 1 and M is a positive integer, or N is a positive integer and M is an integer greater than 1, or N=M and is an integer greater than 1.

Based on the method, the N sending measurement nodes and the M receiving measurement nodes that participate in joint sensing may form K sensing links. The compute node may match, based on sensing parameters of the N sending measurement nodes and the M receiving measurement nodes that participate in the joint sensing, a sensing link with a high sensing resolution and high sensing accuracy for each sensed point in a target region to measure the sensed point. Therefore, the compute node may determine, based on the obtained first information, whether a sensing link for currently measuring the first sensed point is a sensing link matching the first sensed point, and indicate, based on a matching status, whether a receiving measurement node that belongs to the sensing link for currently measuring the first sensed point triggers sensing link switching, to allocate each sensed point to a sensing link matching the sensed point for measurement. This can enhance a sensing resolution and sensing accuracy of a sensing result.

In this embodiment of this application, the compute node that performs the method according to the first aspect may be a terminal device or a network device, or may be a chip (system) or another part or component that may be disposed in a terminal device or a network device, or may be an apparatus including a terminal device or a network device. This is not limited herein.

In a possible design solution, when K is equal to M, the N sending measurement nodes are the M receiving measurement nodes; or when K is less than or equal to N×M, the N sending measurement nodes are different from the M receiving measurement nodes. In other words, solutions provided in embodiments of this application are applicable to two scenarios: a scenario in which a sensing mode is self-sending and self-receiving, and a scenario in which the sensing mode is A-sending and B-receiving.

In a possible design solution, the method provided in this embodiment of this application may further include: sending second information. The second information indicates whether to switch the first sensing link for measuring the first sensed point. Therefore, when the compute node is not the first receiving measurement node, the compute node may notify the first receiving measurement node of a sensing link switching status by using the second information, and may determine the matching status of the sensing link based on the sensing link switching status. In this way, the first receiving measurement node can determine, based on the second information, whether sensing link switching needs to be performed and whether an object needs to be switched, to ensure a resolution and sensing accuracy of joint sensing.

In a possible design solution, the second information includes information indicating a sensing link matching the first sensed point.

In a possible design solution, at least one sensed point matching the first sensing link forms a sub-region within a target region, and the sub-region is provided with a measurement service by the first sensing link. In other words, each of the K sensing links corresponds to one sub-region in the target region. For each sensed point in the sub-region, a sensing effect achieved by measuring the sensed point by using a sensing link matching the sensed point is good, thereby enhancing a resolution and sensing accuracy of joint sensing.

In a possible design solution, the sensing link matching the first sensed point is determined from the K sensing links based on a first sensing parameter respectively corresponding to the N sending measurement nodes and a second sensing parameter respectively corresponding to the M receiving measurement nodes, the first sensing parameter corresponding to the first sending measurement node includes a first sensing resolution unit area of the first sensed point with respect to the first sending measurement node, and the second sensing parameter corresponding to the first receiving measurement node includes a second sensing resolution unit area of the first sensed point with respect to the first receiving measurement node and status information of the first sensing link. Therefore, the compute node obtains sensing parameters of the N sending measurement nodes and the M receiving measurement nodes that participate in joint sensing, and matches a sensing link with a high sensing resolution and high sensing accuracy for each sensed point in the target region to measure the sensed point, so as to enhance a sensing resolution and sensing accuracy of a sensing result.

In a possible design solution, the first sensing resolution unit area of the first sensed point with respect to the first sending measurement node and the second sensing resolution unit area of the first sensed point with respect to the first receiving measurement node are used to determine a sensing resolution unit volume of the first sensed point with respect to the first sensing link. Therefore, a sensing resolution effect that can be achieved by each measurement node by measuring the first sensed point is fed back by using a sensing resolution unit area. The compute node may determine, based on the first sensing resolution unit area of the first sending measurement node and the second sensing resolution unit area of the first receiving measurement node that are included in the sensing link, a sensing resolution achieved by each sensing link by measuring the first sensed point, that is, measure the sensing resolution by using a sensing resolution unit volume. A smaller sensing resolution unit volume indicates a higher sensing resolution achieved by the sensing link. A sensing link with a higher sensing resolution may be allocated to each sensed point in the target region, thereby enhancing a sensing resolution and sensing accuracy of a sensing result.

In a possible design solution, the status information of the first sensing link is used to determine sensing accuracy of the first sensed point with respect to the first sensing link. Therefore, the sensing accuracy of the first sensed point with respect to the first sensing link may be determined based on the status information of the first sensing link, and a sensing effect achieved by using a sensing link is measured in combination with the sensing accuracy and the sensing resolution, so that matching between the sensed point and the sensing link can be more accurate.

In a possible design solution, the method provided in this embodiment of this application may further include: obtaining the first sensing parameter respectively corresponding to the N sending measurement nodes and the second sensing parameter respectively corresponding to the M receiving measurement nodes. It should be understood that, based on different scenarios, manners in which the compute node obtains the first sensing parameter respectively corresponding to the N sending measurement nodes and the second sensing parameter respectively corresponding to the M receiving measurement nodes are different. For example, if the compute node is the first receiving measurement node, the compute node receives the first sensing parameter respectively corresponding to the N sending measurement nodes and the second sensing parameter respectively corresponding to M-1 receiving measurement nodes other than the first receiving measurement node in the M receiving measurement nodes.

In a possible design solution, that the sensing link matching the first sensed point is determined from the K sensing links based on the first sensing parameter respectively corresponding to the N sending measurement nodes and the second sensing parameter respectively corresponding to the M receiving measurement nodes may include: The sensing link matching the first sensed point is determined based on a sensing resolution unit volume of the first sensed point respectively with respect to the K sensing links and status information of the K sensing links. The sensing resolution unit volume of the first sensed point with respect to the first sensing link is determined based on the first sensing resolution unit area of the first sensed point with respect to the first sending measurement node and the second sensing resolution unit area of the first sensed point with respect to the first receiving measurement node, and the sensing accuracy of the first sensed point with respect to the first sensing link is determined based on the sensing resolution unit volume of the first sensed point with respect to the first sensing link and the status information of the first sensing link. Therefore, the compute node computes, based on measurement nodes that participate in the joint sensing, a sensing resolution and sensing accuracy of the first sensed point respectively with respect to the K sensing links, and may determine the sensing link matching the first sensed point, thereby implementing division of sensed points and the sensing links.

In a possible design solution, that the sensing link matching the first sensed point is determined based on the sensing resolution unit volume of the first sensed point respectively with respect to the K sensing links and the status information of the K sensing link may include: The sensing link matching the first sensed point is determined based on K weighted values, the K weighted values are determined based on the sensing resolution unit volume and sensing accuracy of the first sensed point respectively with respect to the K sensing links, a weighted value of the first sensed point with respect to the first sensing link in the K weighted values is determined based on the sensing resolution unit volume of the first sensed point with respect to the first sensing link and the sensing accuracy of the first sensed point with respect to the first sensing link, and a weighted value corresponding to the sensing link matching the first sensed point is a smallest value in the K weighted values. Therefore, the weighted value represents a sensing effect achieved by measuring the first sensed point by using a sensing link, and a sensing link with an optimal sensing effect in the K sensing links is matched to the first sensed point, thereby enhancing a sensing resolution and sensing accuracy.

In a possible design solution, the weighted value of the first sensed point with respect to the first sensing link in the K weighted values satisfies the following relationship: ${Δ}_{n , m}^{i} = {w}_{k} ⋅ {v}_{n , m}^{i} + Var \left({v}_{n , m}^{i}\right)$ , where i is a sequence number of the first sensed point, ${Δ}_{n , m}^{i}$ is the weighted value of the first sensed point with respect to the first sensing link, ${v}_{n , m}^{i}$ is the sensing resolution unit volume of the first sensed point with respect to the first sensing link, $Var \left({v}_{n , m}^{i}\right)$ is the sensing accuracy of the first sensed point with respect to the first sensing link, *wₖ* is a weighting coefficient, n is a sequence number of the first sending measurement node in the N sending measurement nodes, 1≤n≤N, m is a sequence number of the first receiving measurement node in the M receiving measurement nodes, 1≤m≤M, and i, n, and m are integers.

In a possible design solution, the sensing resolution unit volume of the first sensed point with respect to the first sensing link satisfies the following relationship: ${v}_{n , m}^{i} = \frac{{S}_{tx}^{i} \left(n\right) ⋅ {S}_{rx}^{i} \left(m\right)}{{δ}_{r}}$, where ${v}_{n , m}^{i}$ is the sensing resolution unit volume of the first sensed point with respect to the first sensing link, ${S}_{tx}^{i} \left(n\right)$ is the first sensing resolution unit area of the first sensed point with respect to the first sending measurement node, ${S}_{rx}^{i} \left(m\right)$ is the second sensing resolution unit area of the first sensed point with respect to the first receiving measurement node, and ***δᵣ*** is a range resolution.

In a possible design solution, the sensing accuracy of the first sensed point with respect to the first sensing link may satisfy the following relationship: $Var \left({v}_{n , m}^{i}\right) = \frac{{v}_{n , m}^{i}}{\sqrt{{SNR}_{n \to m}^{i}}}$, where ${SNR}_{n \to m}^{i}$ is the status information of the first sensing link, and may reflect a signal-to-noise ratio used by the first sensing link for sensing.

In a possible design solution, the first sensing resolution unit area of the first sensed point with respect to the first sending measurement node satisfies the following relationship: ${S}_{tx}^{i} \left(n\right) = sin \left(\vec{A}, \vec{{R}_{tx , n}^{ι}}\right) ⋅ {R}_{tx , n}^{i} ⋅ {δ}_{r} ⋅ {δ}_{a}$, where ***̅A̅*̅** is an azimuth unit vector, $\vec{{R}_{tx , n}^{ι}}$ is a vector from the first sending measurement node to the first sensed point, ${R}_{tx , n}^{i}$ is a modulus value of $\vec{{R}_{tx , n}^{ι}}$, ***δᵣ*** is the range resolution, and ***δₐ*** is an azimuth angle resolution.

In a possible design solution, the second sensing resolution unit area of the first sensed point with respect to the first receiving measurement node may satisfy the following relationship: ${S}_{rx}^{i} \left(m\right) = sin \left(\vec{E}, \vec{{R}_{rx , m}^{ι}}\right) ⋅ {R}_{rx , m}^{i} ⋅ {δ}_{r} ⋅ {δ}_{e}$, where ***E*** is an elevation vector, $\vec{{R}_{r x , m}^{ι}}$ is a vector from the first receiving measurement node to the first sensed point, ${R}_{rx , m}^{i}$ is a modulus of $\vec{{R}_{r x , m}^{ι}}$, ***δᵣ*** is the range resolution, and ***δₑ*** is an elevation angular resolution.

According to a second aspect, a multi-node joint sensing method is provided. The method may be performed by a first sending measurement node in N sending measurement nodes or a first receiving measurement node in M receiving measurement nodes, or may be performed by a component of the first sending measurement node or the first receiving measurement node, for example, a processor, a chip, or a chip system of the first sending measurement node or the first receiving measurement node, or may be implemented by a logical module or software that can implement all or a part of functions of the first sending measurement node or the first receiving measurement node. The method includes: determining whether to switch a first sensing link for measuring a first sensed point, where the first sensing link is a sensing link including the first sending measurement node and the first receiving measurement node, the first sensing link is one of K sensing links, the K sensing links include the N sending measurement nodes and the M receiving measurement nodes, K is less than or equal to N×M or K is equal to M, and N is an integer greater than 1 and M is a positive integer, or N is a positive integer and M is an integer greater than 1; and when it is determined to skip switching the first sensing link for measuring the first sensed point, measuring a target located at the first sensed point.

Based on the method, the measurement node that belongs to the first sensing link for currently measuring the first sensed point may determine whether the first sensing link for currently measuring the first sensed point needs to be switched, that is, determine whether the first sensing link is a sensing link matching the first sensed point. In a case in which it is determined that the first sensing link is not switched or matched, the target located at the first sensed point is measured, to enhance a sensing resolution and sensing accuracy of joint sensing.

In this embodiment of this application, the first sending measurement node or the first receiving measurement node that performs the method in the second aspect may be a terminal device or a network device, or may be a chip (system) or another part or component that may be disposed in the terminal device or the network device, or may be an apparatus including the terminal device or the network device. This is not limited herein.

In a possible design solution, when K is equal to M, the N sending measurement nodes are the M receiving measurement nodes; or when K is less than or equal to N×M, the N sending measurement nodes are different from the M receiving measurement nodes.

In a possible design solution, determining whether to switch the first sensing link for measuring the first sensed point may include: obtaining second information, where the second information indicates whether to switch the first sensing link for measuring the first sensed point; and determining, based on the second information, whether to switch the first sensing link for measuring the first sensed point. Therefore, the first sending measurement node or the first receiving measurement node may obtain the second information from a compute node, to determine a switching status of the sensing link. Based on the switching status, a matching status of the sensing link of the first receiving measurement node may be learned, to ensure a resolution and sensing accuracy of joint sensing.

In a possible design solution, the method provided in this embodiment of this application may further include: receiving second information. For example, the first receiving measurement node receives the second information from the compute node. For another example, the first sending measurement node receives the second information from the first receiving measurement node.

In a possible design solution, the second information includes information indicating a sensing link matching the first sensed point.

In a possible design solution, the method is applied to the first sending measurement node, and the method provided in this embodiment of this application may further include: sending a first sensing parameter corresponding to the first sending measurement node. The first sensing parameter corresponding to the first sending measurement node includes a first sensing resolution unit area of the first sensed point with respect to the first sending measurement node in a target region, and the first sensing parameter is used to determine the sensing link matching the first sensed point. Therefore, the first sensing parameter may be sent to implement matching between a sensed point in the target region and a sensing link, thereby enhancing a sensing resolution and sensing accuracy.

In a possible design solution, the method provided in this embodiment of this application may further include: when it is determined to switch the first sensing link for measuring the first sensed point, determining, based on the sensing link matching the first sensed point, that the first sending measurement node is a sending measurement node that does not belong to the sensing link matching the first sensed point; and sending third information to a sending measurement node on the sensing link matching the first sensed point. The third information indicates the sending measurement node that belongs to the sensing link matching the first sensed point to measure the first sensed point. Therefore, when the first sending measurement node is not the sending measurement node that belongs to the sensing link matching the first sensed point, the first sending measurement node needs to indicate the sending measurement node on the sensing link matching the first sensed point to perform measurement, so as to implement sensing link switching, and ensure a resolution and sensing accuracy of joint sensing.

In a possible design solution, the method is applied to the first receiving measurement node, and the method provided in this embodiment of this application may further include: sending first information. The first information indicates the first receiving measurement node to request to determine whether the first sensing link for measuring the first sensed point in the target region is a sensing link matching the first sensed point. When the compute node is not the first receiving measurement node, the first receiving measurement node sends the first information, to trigger the compute node to feed back a sensing link matching status, to determine whether sensing link switching needs to be performed, so as to ensure a resolution and sensing accuracy of joint sensing.

In a possible design solution, the method provided in this embodiment of this application may further include: sending a second sensing parameter corresponding to the first receiving measurement node. The second sensing parameter corresponding to the first receiving measurement node includes a second sensing resolution unit area of the first sensed point with respect to the first receiving measurement node and status information of the first sensing link, and the second sensing parameter is used to determine the sensing link matching the first sensed point. Therefore, the second sensing parameter may be sent to implement matching between a sensed point in the target region and a sensing link, thereby enhancing a sensing resolution and sensing accuracy.

In a possible design solution, the method provided in this embodiment of this application may further include: when it is determined to switch the first sensing link for measuring the first sensed point, determining, based on the sensing link matching the first sensed point, that the first receiving measurement node is a receiving measurement node that does not belong to the sensing link matching the first sensed point; and sending fourth information to a receiving measurement node corresponding to the sensing link matching the first sensed point. The fourth information indicates the receiving measurement node that belongs to the sensing link matching the first sensed point to measure the first sensed point. Therefore, when the first receiving measurement node is not the receiving measurement node on the sensing link matching the first sensed point, the first receiving measurement node needs to indicate the receiving measurement node that belongs to the sensing link matching the first sensed point to perform measurement, so as to implement sensing link switching, and ensure a resolution and sensing accuracy of joint sensing.

According to a third aspect, a communication apparatus is provided, and configured to implement the foregoing methods. The communication apparatus may be the compute node in the first aspect, an apparatus including the compute node, or an apparatus included in the compute node, for example, a chip. The communication apparatus includes a corresponding module, unit, or means (means) for implementing the method in the first aspect. The module, unit, or means may be implemented by hardware, software, or hardware executing corresponding software. The hardware or the software includes one or more modules or units corresponding to the foregoing functions.

In some possible designs, the communication apparatus includes a processing module and a transceiver module. The processing module is configured to obtain first information. The first information indicates a first receiving measurement node to request to determine whether a first sensing link is a sensing link matching a first sensed point, the first sensing link is a sensing link including a first sending measurement node and the first receiving measurement node, the first sensing link is one of K sensing links, the K sensing links include N sending measurement nodes and M receiving measurement nodes. The processing module is further configured to: determine, based on the first information, whether to switch the first sensing link for measuring the first sensed point. K is less than or equal to N×M or K is equal to M, and N is an integer greater than 1 and M is a positive integer, or N is a positive integer and M is an integer greater than 1, or N=M and is an integer greater than 1.

In a possible design solution, when K is equal to M, the N sending measurement nodes are the M receiving measurement nodes; or when K is less than or equal to N×M, the N sending measurement nodes are different from the M receiving measurement nodes.

In a possible design solution, the transceiver module is configured to send second information. The second information indicates whether to switch the first sensing link for measuring the first sensed point.

In a possible design solution, the second information includes information indicating a sensing link matching the first sensed point.

In a possible design solution, at least one sensed point matching the first sensing link forms a sub-region within a target region, and the sub-region is provided with a measurement service by the first sensing link.

In a possible design solution, the sensing link matching the first sensed point is determined from the K sensing links based on a first sensing parameter respectively corresponding to the N sending measurement nodes and a second sensing parameter respectively corresponding to the M receiving measurement nodes, the first sensing parameter corresponding to the first sending measurement node includes a first sensing resolution unit area of the first sensed point with respect to the first sending measurement node, and the second sensing parameter corresponding to the first receiving measurement node includes a second sensing resolution unit area of the first sensed point with respect to the first receiving measurement node and status information of the first sensing link.

In a possible design solution, the first sensing resolution unit area of the first sensed point with respect to the first sending measurement node and the second sensing resolution unit area of the first sensed point with respect to the first receiving measurement node are used to determine a sensing resolution unit volume of the first sensed point with respect to the first sensing link.

In a possible design solution, the status information of the first sensing link is used to determine sensing accuracy of the first sensed point with respect to the first sensing link.

In a possible design solution, the processing module is further configured to obtain the first sensing parameter respectively corresponding to the N sending measurement nodes and the second sensing parameter respectively corresponding to the M receiving measurement nodes.

In a possible design solution, that the sensing link matching the first sensed point is determined from the K sensing links based on the first sensing parameter respectively corresponding to the N sending measurement nodes and the second sensing parameter respectively corresponding to the M receiving measurement nodes may include: The sensing link matching the first sensed point is determined based on a sensing resolution unit volume of the first sensed point respectively with respect to the K sensing links and status information of the K sensing links. The sensing resolution unit volume of the first sensed point with respect to the first sensing link is determined based on the first sensing resolution unit area of the first sensed point with respect to the first sending measurement node and the second sensing resolution unit area of the first sensed point with respect to the first receiving measurement node, and the sensing accuracy of the first sensed point with respect to the first sensing link is determined based on the sensing resolution unit volume of the first sensed point with respect to the first sensing link and the status information of the first sensing link.

In a possible design solution, that the sensing link matching the first sensed point is determined based on the sensing resolution unit volume of the first sensed point respectively with respect to the K sensing links and the status information of the K sensing link may include: The sensing link matching the first sensed point is determined based on K weighted values, the K weighted values are determined based on the sensing resolution unit volume and sensing accuracy of the first sensed point respectively with respect to the K sensing links, a weighted value of the first sensed point with respect to the first sensing link in the K weighted values is determined based on the sensing resolution unit volume of the first sensed point with respect to the first sensing link and the sensing accuracy of the first sensed point with respect to the first sensing link, and a weighted value corresponding to the sensing link matching the first sensed point is a smallest value in the K weighted values.

In a possible design solution, the weighted value of the first sensed point with respect to the first sensing link in the K weighted values satisfies the following relationship: ${Δ}_{n , m}^{i} = {w}_{k} ⋅ {v}_{n , m}^{i} + Var \left({v}_{n , m}^{i}\right)$ , where i is a sequence number of the first sensed point, ${Δ}_{n , m}^{i}$ is the weighted value of the first sensed point with respect to the first sensing link, ${v}_{n , m}^{i}$ is the sensing resolution unit volume of the first sensed point with respect to the first sensing link, $Var \left({v}_{n , m}^{i}\right)$ is the sensing accuracy of the first sensed point with respect to the first sensing link, *wₖ* is a weighting coefficient, n is a sequence number of the first sending measurement node in the N sending measurement nodes, 1≤n≤N, m is a sequence number of the first receiving measurement node in the M receiving measurement nodes, 1≤m≤M, and i, n, and m are integers.

In a possible design solution, the sensing resolution unit volume of the first sensed point with respect to the first sensing link satisfies the following relationship: ${v}_{n , m}^{i} = \frac{{S}_{tx}^{i} \left(n\right) ⋅ {S}_{rx}^{i} \left(m\right)}{{δ}_{r}}$, where ${v}_{n , m}^{i}$ is the sensing resolution unit volume of the first sensed point with respect to the first sensing link, ${S}_{tx}^{i} \left(n\right)$ is the first sensing resolution unit area of the first sensed point with respect to the first sending measurement node, ${S}_{rx}^{i} \left(m\right)$ is the second sensing resolution unit area of the first sensed point with respect to the first receiving measurement node, and ***δᵣ*** is a range resolution.

In a possible design solution, the sensing accuracy of the first sensed point with respect to the first sensing link may satisfy the following relationship: $Var \left({v}_{n , m}^{i}\right) = \frac{{v}_{n , m}^{i}}{\sqrt{{SNR}_{n \to m}^{i}}}$, where ${SNR}_{n \to m}^{i}$ is the status information of the first sensing link.

In a possible design solution, the first sensing resolution unit area of the first sensed point with respect to the first sending measurement node satisfies the following relationship: ${S}_{tx}^{i} \left(n\right) = sin \left(\vec{A}, \vec{{R}_{tx , n}^{i}}\right) ⋅ {R}_{tx , n}^{i} ⋅ {δ}_{r} ⋅ {δ}_{a}$, where ***̅A̅*̅** is an azimuth unit vector, $\vec{{R}_{tx , n}^{i}}$ is a vector from the first sending measurement node to the first sensed point, ${R}_{tx , n}^{i}$ is a modulus value of $\vec{{R}_{tx , n}^{i}}$, ***δᵣ*** is the range resolution, and ***δₐ*** is an azimuth angle resolution.

In a possible design solution, the second sensing resolution unit area of the first sensed point with respect to the first receiving measurement node may satisfy the following relationship: ${S}_{rx}^{i} \left(m\right) = sin \left(\vec{E}, \vec{{R}_{r x , m}^{i}}\right) ⋅ {R}_{rx , m}^{i} ⋅ {δ}_{r} ⋅ {δ}_{e}$, where ***̅E̅*̅** is an elevation vector, $\vec{{R}_{r x , m}^{i}}$ is a vector from the first receiving measurement node to the first sensed point, ${R}_{rx , m}^{i}$ is a modulus of $\vec{{R}_{r x , m}^{i}}$, ***δᵣ*** is the range resolution, and ***δₑ*** is an elevation angular resolution.

In a possible design solution, the transceiver module may include a receiving module and a sending module. The sending module is configured to implement a sending function of the communication apparatus according to the third aspect, and the receiving module is configured to implement a receiving function of the communication apparatus according to the third aspect.

In a possible design solution, the communication apparatus according to the third aspect may further include a storage module, and the storage module stores a program or instructions. When the processing module executes the program or the instructions, the communication apparatus according to the third aspect is enabled to perform the method according to the first aspect.

According to a fourth aspect, a communication apparatus is provided, and configured to implement the foregoing methods. The communication apparatus may be the first sending measurement node or the first receiving measurement node in the second aspect, or an apparatus including the first sending measurement node or the first receiving measurement node, or an apparatus included in the first sending measurement node or the first receiving measurement node, for example, a chip. The communication apparatus includes a corresponding module, unit, or means (means) for implementing the method in the second aspect. The module, unit, or means may be implemented by hardware, software, or hardware executing corresponding software. The hardware or the software includes one or more modules or units corresponding to the foregoing functions.

In some possible designs, the communication apparatus includes a processing module and a transceiver module. The processing module is configured to determine whether to switch a first sensing link for measuring a first sensed point, where the first sensing link is a sensing link including the first sending measurement node and the first receiving measurement node, the first sensing link is one of K sensing links, the K sensing links include the N sending measurement nodes and the M receiving measurement nodes, K is less than or equal to N×M or K is equal to M, and N is an integer greater than 1 and M is a positive integer, or N is a positive integer and M is an integer greater than 1. When determining to skip switching the first sensing link for measuring the first sensed point, the processing module is further configured to: measure a target located at the first sensed point.

In a possible design solution, when K is equal to M, the N sending measurement nodes are the M receiving measurement nodes; or when K is less than or equal to N×M, the N sending measurement nodes are different from the M receiving measurement nodes.

In a possible design solution, that the processing module is configured to determine whether to switch the first sensing link for measuring the first sensed point includes: The processing module is configured to obtain second information. The second information indicates whether to switch the first sensing link for measuring the first sensed point. The processing module is further configured to: determine, based on the second information, whether to switch the first sensing link for measuring the first sensed point.

In a possible design solution, the processing module is configured to control the transceiver module to receive the second information.

In a possible design solution, the second information includes information indicating a sensing link matching the first sensed point.

In a possible design solution, the apparatus is used for the first sending measurement node, and the transceiver module is configured to send a first sensing parameter corresponding to the first sending measurement node. The first sensing parameter corresponding to the first sending measurement node includes a first sensing resolution unit area of the first sensed point with respect to the first sending measurement node in a target region, and the first sensing parameter is used to determine the sensing link matching the first sensed point.

In a possible design solution, when it is determined to switch the first sensing link for measuring the first sensed point, the processing module is further configured to determine, based on the sensing link matching the first sensed point, that the first sending measurement node is a sending measurement node that does not belong to the sensing link matching the first sensed point. The transceiver module is further configured to send third information to a sending measurement node on the sensing link matching the first sensed point. The third information indicates the sending measurement node that belongs to the sensing link matching the first sensed point to measure the first sensed point.

In a possible design solution, the apparatus is used for the first receiving measurement node, and the transceiver module is further configured to send first information. The first information indicates the first receiving measurement node to request to determine whether the first sensing link for measuring the first sensed point in the target region is a sensing link matching the first sensed point.

In a possible design solution, the transceiver module is further configured to send a second sensing parameter corresponding to the first receiving measurement node. The second sensing parameter corresponding to the first receiving measurement node includes a second sensing resolution unit area of the first sensed point with respect to the first receiving measurement node and status information of the first sensing link, and the second sensing parameter is used to determine the sensing link matching the first sensed point.

In a possible design solution, when it is determined to switch the first sensing link for measuring the first sensed point, the processing module is further configured to determine, based on the sensing link matching the first sensed point, that the first receiving measurement node is a receiving measurement node that does not belong to the sensing link matching the first sensed point. The transceiver module is further configured to send fourth information to a receiving measurement node corresponding to the sensing link matching the first sensed point. The fourth information indicates the receiving measurement node that belongs to the sensing link matching the first sensed point to measure the first sensed point.

In a possible design solution, the transceiver module may include a receiving module and a sending module. The sending module is configured to implement a sending function of the communication apparatus according to the fourth aspect, and the receiving module is configured to implement a receiving function of the communication apparatus according to the fourth aspect.

In a possible design solution, the communication apparatus according to the fourth aspect may further include a storage module, and the storage module stores a program or instructions. When the processing module executes the program or the instructions, the communication apparatus according to the fourth aspect is enabled to perform the method according to the second aspect.

According to a fifth aspect, a communication apparatus is provided (for example, the communication apparatus may be a chip or a chip system). The communication apparatus includes a processor, configured to implement the functions in the first aspect or the second aspect.

In a possible design solution, the communication apparatus may further include a memory. The memory is configured to store necessary program instructions and data. The processor is coupled to the memory, and the processor is configured to execute the computer program or the instructions stored in the memory, so that the communication apparatus performs the method according to the first aspect or the second aspect.

In a possible design solution, the communication apparatus according to the fifth aspect may further include a transceiver. The transceiver may be a transceiver circuit or an interface circuit. The transceiver may be used by the communication apparatus according to the fifth aspect to communicate with another communication apparatus.

In a possible design solution, the processor may be integrated with the memory.

In some possible designs, when the apparatus is a chip system, the apparatus may include a chip, or may include a chip and another discrete device.

According to a sixth aspect, a communication apparatus is provided. The communication apparatus includes a processor and an interface circuit. The interface circuit is configured to: receive a signal from a communication apparatus other than the communication apparatus and transmit the signal to the processor, or send a signal from the processor to a communication apparatus other than the communication apparatus. The processor is configured to implement the method according to the first aspect or the second aspect by using a logic circuit or executing code instructions.

According to a seventh aspect, a communication apparatus is provided. The communication apparatus may be a compute node, or may be a module or unit (for example, a chip, a chip system, or a circuit) that is in the compute node and that is in one-to-one correspondence with the method/operation/step/action described in the first aspect, or may be used in cooperation with the compute node. The communication apparatus may be a first sending measurement node or a first receiving measurement node, or may be a module or unit (for example, a chip, a chip system, or a circuit) that is in the first sending measurement node or the first receiving measurement node and that is in a one-to-one correspondence with the method/operation/step/action described in the second aspect, or may be used in cooperation with the first sending measurement node or the first receiving measurement node.

It may be understood that when the communication apparatus provided in the fifth aspect or the seventh aspect is a chip, the foregoing sending action/function may be understood as outputting, and the foregoing receiving action/function may be understood as inputting.

According to an eighth aspect, a computer-readable storage medium is provided. The computer-readable storage medium stores a computer program or instructions. When the computer program or the instructions are run on a communication apparatus, the communication apparatus is enabled to perform the method according to the first aspect or the second aspect.

According to a ninth aspect, a computer program product including instructions is provided, including computer program code. When the computer program code is run on a communication apparatus, the communication apparatus is enabled to perform the method according to the first aspect or the second aspect.

According to a tenth aspect, a communication system is provided, including a communication apparatus configured to implement the method according to the first aspect and a communication apparatus configured to implement the method according to the second aspect.

### BRIEF DESCRIPTION OF DRAWINGS

FIG. 1 is a schematic flowchart of cell handover;
FIG. 2 is a diagram of an architecture of a sensing communication system according to an embodiment of this application;
FIG. 3a is a diagram of a scenario applicable to the foregoing sensing communication system according to an embodiment of this application;
FIG. 3b is a diagram of another scenario applicable to the foregoing sensing communication system according to an embodiment of this application;
FIG. 4 is a schematic flowchart of a multi-node joint sensing method according to an embodiment of this application;
FIG. 5A and FIG. 5B are diagrams of sub-region division in a target region in multi-node joint sensing according to an embodiment of this application;
FIG. 6 is a diagram of other sub-region division in a target region in multi-node joint sensing according to an embodiment of this application;
FIG. 7 is a schematic flowchart of another multi-node joint sensing method according to an embodiment of this application;
FIG. 8 is a schematic flowchart of still another multi-node joint sensing method according to an embodiment of this application;
FIG. 9 is a diagram of a simulation scenario of multi-node joint sensing according to an embodiment of this application;
FIG. 10A to FIG. 10D are diagrams of a sensing effect of multi-node joint sensing according to an embodiment of this application;
FIG. 11 is a diagram of a structure of a communication apparatus according to an embodiment of this application; and
FIG. 12 is a diagram of a structure of another communication apparatus according to an embodiment of this application.

### DESCRIPTION OF EMBODIMENTS

All aspects, embodiments, or features are presented in embodiments of this application by describing a system that may include a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

Technical solutions in embodiments of this application may be applied to various communication systems, for example, a wireless fidelity (wireless fidelity, Wi-Fi) system, a vehicle-to-everything (vehicle-to-everything, V2X) communication system, a device-to-device (device-to-device, D2D) communication system, an internet-of-vehicles communication system, a 4th-generation (4th-generation, 4G) mobile communication system like a long term evolution (long term evolution, LTE) system or a worldwide interoperability for microwave access (worldwide interoperability for microwave access, WiMAX) communication system, a 5th-generation (5th-generation, 5G) mobile communication system like a new radio (new radio, NR) system, and a future communication system like a 6th-generation (6th-generation, 6G) mobile communication system.

The following describes a communication system, a used network element, and related terms in embodiments of this application.

### 1. Cell handover (handover)

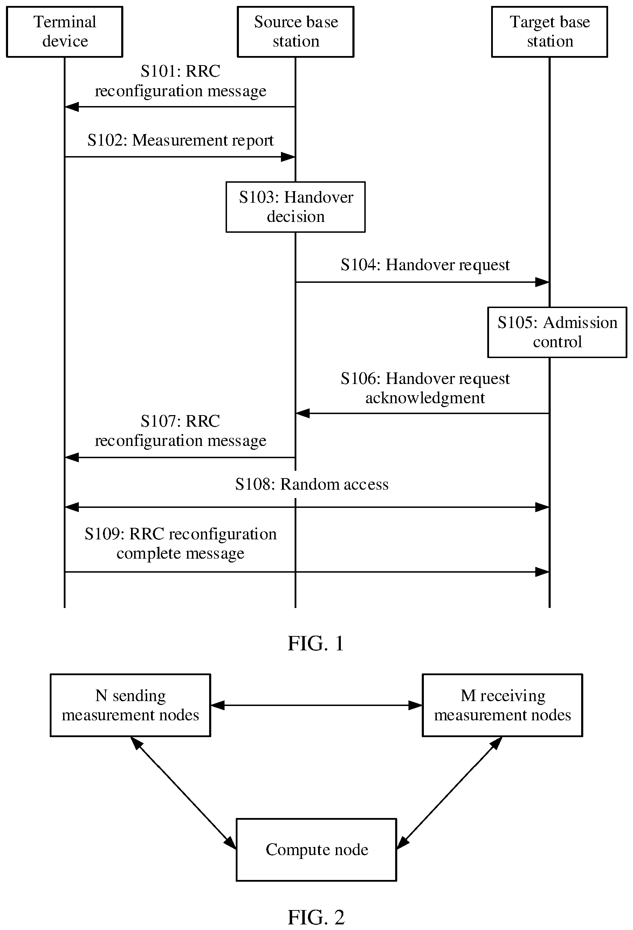

In a cellular communication system, due to movement of a terminal device, signal quality of a cell currently accessed by the terminal device may deteriorate, and the terminal device needs to be handed over to a cell with better signal quality to obtain a service. In a movement process, the terminal device reports a measurement report to a source base station, and the source base station determines whether the terminal device is to be handed over. As shown in FIG. 1, a cell handover procedure specifically includes the following handover steps.

S101: The source base station sends a radio resource control (radio resource control, RRC) reconfiguration (RRC Reconfiguration) message to the terminal device. Correspondingly, the terminal device receives the RRC reconfiguration message from the source base station.

The source base station sends an RRC reconfiguration message to a terminal device in a connected state, to indicate the terminal device to perform measurement. The RRC reconfiguration message includes parameters such as a measurement object, a reporting configuration, and a measurement identifier.

The reporting configuration defines related configurations of a measurement report, including a reporting evaluation criterion of the measurement report, for example, whether reporting of the measurement report is triggered by a measurement event or is performed periodically. For example, the measurement event may be at least one of: event A1, event A2, event A3, event A4, event A5, event A6, event B1, or event B2. A threshold corresponding to the measurement event is a reference value for determining to enter or leave the event, and a specific value of the threshold is generally configured by the network device.

When a measurement result (which may be a measurement result that has undergone processing such as filtering) satisfies an entering condition of a measurement event and this state remains for time-to-trigger (time-to-trigger, TTT), it may be considered that the measurement event is satisfied. The TTT may be configured by a network side, or agreed on in advance. It may be understood that, after an agreement is reached, when a leaving condition of a measurement event is satisfied and this state remains for a period of time, it may also be considered that the measurement event is satisfied.

S102: The terminal device sends a measurement report (Measurement Report) to the source base station. Correspondingly, the source base station receives the measurement report from the terminal device.

After performing measurement on cells based on the RRC reconfiguration message, the terminal device forms a measurement report to report various events to the source base station. The measurement may include a reference signal received power (reference signal received power, RSRP), reference signal received quality (reference signal received quality, RSRQ), a signal to interference plus noise ratio (signal to interference plus noise ratio, SINR), and the like of a current serving cell (namely, a source cell), and a physical cell identifier (physical cell identifier, PCI), RSRP, RSRQ, SINR, and the like of a neighboring cell. For example, a format of the measurement report is as follows:

| | | | |
|---|---|---|---|
| MeasID | | | |
| | ServCellID | | 22 |
| | MeasResultServingCell | | |
| | | RSRP 55(-101 dB) | |
| | | RSRQ | Optional |
| | | SINR | Optional |
| | MeasResultBestNeighborCell | | |
| | | phyCellID | 21 |
| | | RSRP | 65(-91 dB) |
| | | RSRQ | Optional |
| | | SINR | Optional |

S103: The source base station performs a handover decision (Handover Decision).

After receiving the measurement report, the source base station determines, based on the measurement report, to perform cell handover, that is, to perform handover from the source base station to a target base station.

S104: The source base station sends a handover request (Handover Request) to the target base station. Correspondingly, the target base station receives the handover request from the source base station.

S105: The target base station performs admission control (Admission Control).

The target base station determines, based on the handover request, whether to allow access of the terminal device, and if a determining result is that access of the terminal device is allowed, sends a handover acknowledgment message to the source base station. The handover request acknowledgment includes parameters such as a new cell-radio network temporary identifier (cell-radio network temporary identifier, C-RNTI) and a security-related algorithm of the target base station.

S106: The target base station sends the handover request acknowledgment (Handover Request ACK) to the source base station. Correspondingly, the source base station receives the handover request acknowledgment from the target base station.

S107: The source base station sends an RRC reconfiguration (RRC Reconfiguration) message to the terminal device. Correspondingly, the terminal device receives the RRC reconfiguration message from the source base station.

After receiving the handover acknowledgment message sent from the target base station, the source base station sends the RRC reconfiguration message (handover command) to the terminal device. Content included in the RRC reconfiguration message is from the handover request acknowledgment in S106. Specifically, in an NR system, the handover command includes related information of the target cell and related configuration parameters required for the terminal device to access the target cell, for example, information about the target cell (for example, a PCI of the target cell and frequency information corresponding to the target cell), a C-RNTI allocated by the target cell to the terminal device, and information about a random access channel (random access channel, RACH) resource (for example, a dedicated RACH resource and/or a common RACH resource) required for accessing the target cell.

S108: The terminal device performs random access to the target base station.

The terminal device initiates random access to the target base station based on the handover command. In an existing handover procedure, the terminal device is disconnected from the source base station, and data receiving and sending of the terminal device are briefly interrupted before the terminal device successfully accesses the target base station.

S109: The terminal device sends an RRC reconfiguration complete (RRC Reconfiguration Complete) message to the target base station. Correspondingly, the target base station receives the RRC reconfiguration complete message from the terminal device.

For the cell handover, the network device determines the target cell based on an RSRP, an SINR, RSRQ, or the like that is of the cell neighboring the current serving cell and that is measured at a moment and reported by the terminal device, and indicates the terminal device to be handed over from the current cell to the target cell.

### 2. ISAC

ISAC may also be referred to as joint communication and sensing (joint communication and sensing, JCS) or joint communication and sensing (joint communication and sensing, JCAS). In a 6G mobile communication system, a higher frequency band (millimeter wave or even terahertz), a wider bandwidth, and a larger-scale antenna array make high-precision and high-resolution sensing possible, thereby enabling ISAC to be implemented in one system, so that communication and sensing functions complement each other. In one aspect, an entire communication network may be used as a gigantic sensor. Network elements send and receive radio signals, and use transmission, reflection, and scattering of radio waves to better sense and understand the physical world. By obtaining distance, speed, and angle information from the radio signals, a wide variety of new services such as high-precision positioning, gesture capture, motion recognition, detection of passive objects, imaging, and environment reconstruction can be provided, thereby implementing "network as a sensor" (Network as a Sensor). In another aspect, high-precision positioning, imaging, and environment reconstruction capabilities provided by sensing can help improve communication performance, as manifested in more accurate beamforming and faster beam failure recovery, thereby implementing "sensing-assisted communication". Sensing is also a "new channel" for observing and sampling the physical and biological worlds, to connect the physical and biological worlds to the digital world. Application scenarios of a future 6G ISAC system are likely to include ultra-high-precision positioning, synchronous imaging, map construction, human sensory enhancement, and the like.

A sensing process is implemented by using a sensing signal. The sensing signal may be a signal used for sensing a target or detecting a target, in other words, the sensing signal is a signal used for sensing environment information or detecting environment information. For example, the sensing signal may be an electromagnetic wave that is sent by a network device and that is used for sensing environment information.

An echo signal is a signal generated after a sensing signal interacts with a sensing target in an environment. A delay of the echo signal with respect to the sent sensing signal reflects a distance of the sensing target. A Doppler frequency shift of the echo signal with respect to the sent sensing signal reflects a speed of the sensing target.

In embodiments of this application, the signal obtained after the sensing signal interacts with the sensing target may also be referred to as a signal obtained after the sensing signal is reflected by the sensing target, a signal obtained after the sensing signal is refracted by the sensing target, a signal obtained after the sensing signal is diffracted by the sensing target, a signal obtained after the sensing signal is transmitted through the sensing target, a signal obtained after the sensing signal is scattered or diffracted by the sensing target, or the like. This is not specifically limited herein.

The sensing target may include various tangible objects that can be sensed on the ground, for example, a ground object like a mountain, a forest, or a building, and may further include a movable object like a vehicle or a terminal device. The sensing target is a target that can be sensed by a network device having a sensing function, and the target may feed back an electromagnetic wave to the network device. The sensing target may also be referred to as a detected target, a sensed object, a detected object, a sensed device, or the like. This is not limited herein.

It may be understood that the sensing target may be mobile or fixed, or may be active or passive. Active may mean that the sensing target has a data processing capability. For example, the sensing target is a base station, a mobile phone, a router, a vehicle, an uncrewed aerial vehicle, or a radio frequency identification (radio frequency identification, RFID) device. Passive may mean that the sensing target does not have a data processing capability, for example, the sensing target is an animal, a plant, a vehicle, or a building.

### 3. Sensing mode

In the current 3rd generation partnership project (3rd generation partnership project, 3GPP) discussion, it has been determined that sensing modes may be classified into the following six modes:
(1) A base station performs sending and receiving: The sensing signal is sent by the base station, and then an echo signal is received by the base station after the sensing signal is reflected by a target in an environment.
(2) A base station A performs sending and a base station B performs receiving: The sensing signal is sent by the base station A, and then an echo signal is received by the base station B after the sensing signal is reflected by a target in an environment.
(3) A base station performs sending and a terminal performs receiving: The sensing signal is sent by the base station, and an echo signal is received by the terminal after the sensing signal is reflected by a target in an environment.
(4) A terminal performs sending and a base station performs receiving: The sensing signal is sent by the terminal, and an echo signal is received by the base station after the sensing signal is reflected by a target in an environment.
(5) A terminal performs sending and receiving. The sensing signal is sent by the terminal, and an echo signal is received by the terminal after the sensing signal is reflected by a target in an environment.
(6) A terminal A performs sending and a terminal B performs receiving: The sensing signal is sent by the terminal A, and an echo signal is received by the terminal B after the sensing signal is reflected by a target in an environment.

The sensing mode (1) and the sensing mode (5) may be referred to as a self-sending and self-receiving mode, and the sensing mode (2) to the sensing mode (4) and the sensing mode (6) may be referred to as an A-sending and B-receiving mode. This is not limited herein.

In an ISAC scenario, a plurality of measurement nodes may jointly provide a high-quality sensing service. However, because a sensed object may be passive, a measurement node that provides a sensing service may not be handed over by sending a measurement report, like a terminal device in a communication service. In this case, how to jointly provide a high-quality sensing service by a plurality of measurement nodes is not clear.

In view of this, embodiments of this application provide a multi-node joint sensing method and a communication apparatus, to provide a high-quality sensing service.

To better understand embodiments of this application, the following several points are described before embodiments of this application.

First, in embodiments of this application, "indicate" may include "directly indicate" and "indirectly indicate". When a piece of "indication information" is described as indicating A, the indication information may directly indicate A or indirectly indicate A, but it does not indicate that the indication information definitely carries A.

The information indicated by the indication information is referred to as to-be-indicated information. In a specific implementation process, the to-be-indicated information may be indicated in a plurality of manners. For example, the to-be-indicated information may be directly indicated, for example, the to-be-indicated information or an index of the to-be-indicated information. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement sequence of a plurality of pieces of information that is pre-agreed on (for example, stipulated in a protocol), to reduce indication overheads to a specific extent. In addition, a common part of all pieces of information may be identified and indicated in a unified manner, to reduce indication overheads caused by separately indicating same information.

Furthermore, specific indication manners may alternatively be various existing indication manners, for example, but not limited to, the foregoing indication manners and various combinations thereof. For details about the various indication manners, refer to the conventional technology. Details are not described in this specification. It can be learned from the foregoing descriptions that, for example, when a plurality of pieces of information of a same type need to be indicated, different information may be indicated in different manners. In a specific implementation process, a required indication manner may be selected based on a specific requirement. The selected indication manner is not limited in embodiments of this application. In this way, the indication manner in embodiments of this application should be understood as covering various methods that can enable a to-be-indicated party to learn of to-be-indicated information.

The to-be-indicated information may be sent as a whole, or may be divided into a plurality of pieces of sub-information for separate sending. In addition, sending cycles and/or sending occasions of these pieces of sub-information may be the same or different. A specific sending method is not limited in this application. The sending cycles and/or sending occasions of these pieces of sub-information may be predefined, for example, predefined according to a protocol; or may be configured by sending configuration information by a transmit-end device to a terminal device. The configuration information may include, for example, but not limited to, one or a combination of at least two of RRC signaling, media access control (media access control, MAC) layer signaling, and physical layer signaling. The MAC layer signaling includes, for example, a MAC-control element (control element, CE). The physical (physical, PHY) layer signaling includes, for example, downlink control information (downlink control information, DCI).

Second, "first", "second", and various numbers in embodiments of this application are merely for differentiation for ease of description, but are not intended to limit the scope of embodiments of this application. For example, different indication information is distinguished. For example, first information and second information are merely used to distinguish between different information, and do not limit a sequence of the first information and the second information. A person skilled in the art may understand that the terms such as "first" and "second" do not limit a quantity or an execution sequence, and the terms such as "first" and "second" do not indicate a definite difference.

Third, in embodiments of this application, descriptions such as "when", "in a case", and "if" mean that a device (for example, a terminal device or a network device) performs corresponding processing in an objective situation, and are not intended to limit time, and the device (for example, the terminal device or the network device) is not required to perform a determining action during implementation; and do not mean any other limitation.

In addition, in embodiments of this application, terms such as "example" or "for example" are used to give an example, an illustration, or a description. Any embodiment or design solution described as an "example" or "for example" in embodiments of this application should not be explained as being more preferred or having more advantages than another embodiment or design solution. Exactly, use of the terms such as "example" or "for example" is intended to present a related concept in a specific manner for ease of understanding.

Finally, network architectures and service scenarios that are described in embodiments of this application are intended to describe the technical solutions in embodiments of this application more clearly, and do not constitute any limitation on the technical solutions provided in embodiments of this application. A person of ordinary skill in the art can know that, as the network architectures evolve and new service scenarios emerge, the technical solutions provided in embodiments of this application are also applicable to similar technical problems.

For example, FIG. 2 is a diagram of an architecture of a sensing communication system according to an embodiment of this application. As shown in FIG. 2, the sensing communication system includes a compute node, N sending measurement nodes, and M receiving measurement nodes, where N is an integer greater than 1 and M is a positive integer, or N is a positive integer and M is an integer greater than 1, or M=N and both M and N are integers greater than 1. Any two nodes may directly communicate with each other, or may indirectly communicate with each other. This is not limited herein.

The compute node is configured to implement a computing and management function, and is mainly used for computing a sensing link (for example, with high sensing accuracy) matching each sensed point in a target region. One or more sensed points that match a same sensing link form a sub-region in the target region. The sensed point located in the sub-region is measured by using the matched sensing link.

The sending measurement node and the receiving measurement node are sensing nodes. The sending measurement node is configured to send a sensing signal. The receiving measurement node is configured to: receive an echo signal obtained after the sensing signal interacts with a target, and measure the echo signal to obtain a sensing result. Different sending measurement nodes and different receiving measurement nodes may form different sensing links. The N sending measurement nodes and the M receiving measurement nodes may form K sensing links. Different sensing links have different sensing accuracy for a same sensed point. The sending measurement node and/or the receiving measurement node may obtain information from the compute node to determine whether a currently measured sensed point is a node in a sub-region corresponding to the sensed point, to determine whether to perform a switching operation. For specific implementation, refer to the following specific descriptions in the method embodiments. Details are not described herein again. K is less than or equal to N×M or K=M.

In some implementations, the compute node may be one of the N sending measurement nodes or the M receiving measurement nodes, or may be an independent node other than the N sending measurement nodes and the M receiving measurement nodes. This is not limited herein.

For the N sending measurement nodes or the M receiving measurement nodes, based on different sensing modes, the N sending measurement nodes may be the same as or different from the M receiving measurement nodes, or may be partially the same as or different from the M receiving measurement nodes. For specific descriptions, refer to related descriptions in the following method embodiments. Details are not described herein again.

In embodiments of this application, the compute node, the sending measurement node, and the receiving measurement node may be network devices, or may be terminal devices. This is not limited herein. Generally, the sending measurement node is a terminal device, and the receiving measurement node is a network device.

The network device may also be referred to as an access network (radio access network, RAN) node, an access network device, a RAN entity, an access node, or the like, is located on a network side of the foregoing sensing communication system, and is configured to help the terminal device implement radio access. The network device is a device having a wireless transceiver function or a chip or a chip system disposed on the device. The network device includes but is not limited to: a base station (base station), an evolved NodeB (evolved NodeB, eNodeB), an access point (access point, AP), a transmission reception point (transmission reception point, TRP), a next generation NodeB (next generation NodeB, gNB), a next generation NodeB in a 6G mobile communication system, a base station in a future mobile communication system, or an access node in a Wi-Fi system. The network device may be a macro base station, a micro base station, an indoor base station, a relay node or a donor node, an open radio access network (open radio access network, ORAN), or a radio controller in a centralized radio access network (centralized radio access network, CRAN) scenario. Optionally, the RAN node may alternatively be a server, a wearable device, a vehicle, a vehicle-mounted device, or the like. For example, an access network device in a V2X technology may be a road side unit (road side unit, RSU). All or a part of functions of the network device in this application may also be implemented through a software function running on hardware, or may be implemented through an instantiated virtualization function on a platform (for example, a cloud platform). The network device in this application may alternatively be a logical node, a logical module, or software that can implement all or a part of functions of the network device.

In another possible scenario, a plurality of RAN nodes coordinate to assist the terminal device in implementing wireless access, and different RAN nodes separately implement a part of functions of a base station. For example, the RAN node may be a central unit (central unit, CU), a distributed unit (distributed unit, DU), a CU-control plane (control plane, CP), a CU-user plane (user plane, UP) or a radio unit (radio unit, RU). The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may alternatively have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of a software module and a hardware module.

A form of the network device is not limited in embodiments of this application. An apparatus configured to implement a function of the network device may be a network device, or may be an apparatus, for example, a chip system, that can support the network device in implementing the function. The apparatus may be mounted in the network device or used in cooperation with the network device.

The terminal device is a terminal that accesses the foregoing sensing communication system and that has a wireless transceiver function, or may be a chip or a chip system that may be disposed in the terminal. The terminal device may also be referred to as user equipment (user equipment, UE), a user apparatus, an access terminal, a subscriber unit, a subscriber station, a mobile station, a remote station, a remote terminal, a mobile device, a user terminal, a terminal, a wireless communication device, a user agent, or a user apparatus. The terminal device in embodiments of this application may be a mobile phone (mobile phone), a pad (Pad), a computer having a wireless transceiver function, a virtual reality (virtual reality, VR) terminal device, an augmented reality (augmented reality, AR) terminal device, a wireless terminal in industrial control (industrial control), a wireless terminal in self-driving (self-driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), an in-vehicle terminal, an RSU having a terminal function, or the like. The terminal device in this application may alternatively be a vehicle-mounted module, a vehicle-mounted assembly, a vehicle-mounted component, a vehicle-mounted chip, or an on-board unit that is built in a vehicle as one or more components or units. The vehicle may implement the method provided in this application by using the built-in vehicle-mounted module, vehicle-mounted assembly, vehicle-mounted component, vehicle-mounted chip, or on-board unit.

A device form of the terminal device is not limited in embodiments of this application. An apparatus for implementing a function of a terminal device may be a terminal device, or may be an apparatus, for example, a chip system, that can support a terminal device in implementing the function. The apparatus may be mounted in a terminal device or used in cooperation with a terminal device. In embodiments of this application, the chip system may include a chip, or may include a chip and another discrete component.

In embodiments of this application, a plurality of antennas are configured for each communication apparatus, for example, the network device and the terminal device. The plurality of antennas may include at least one transmit antenna configured to send a signal and at least one receive antenna configured to receive a signal. In addition, each communication apparatus additionally further includes a transmitter chain and a receiver chain. A person of ordinary skill in the art may understand that each communication apparatus may include a plurality of components (for example, a processor, a modulator, a multiplexer, a demodulator, a demultiplexer, and an antenna) related to signal sending and receiving. Therefore, the communication apparatuses may communicate with each other by using a multi-antenna technology. Specifically, the communication apparatus has an antenna array, and antenna array elements in the antenna array may be used for sensing, and may also be used for communication. In other words, each communication apparatus may simultaneously send a plurality of sensing signals and/or communication signals, and the antenna array of the communication apparatus has sensing and communication functions. During sensing, the network device and the terminal device may also be referred to as a sensing device, a sensing apparatus, a sensing communication apparatus, a sensing device, a sensing communication device, or the like. This is not limited.

The following provides two joint sensing scenarios applicable to this solution as examples.

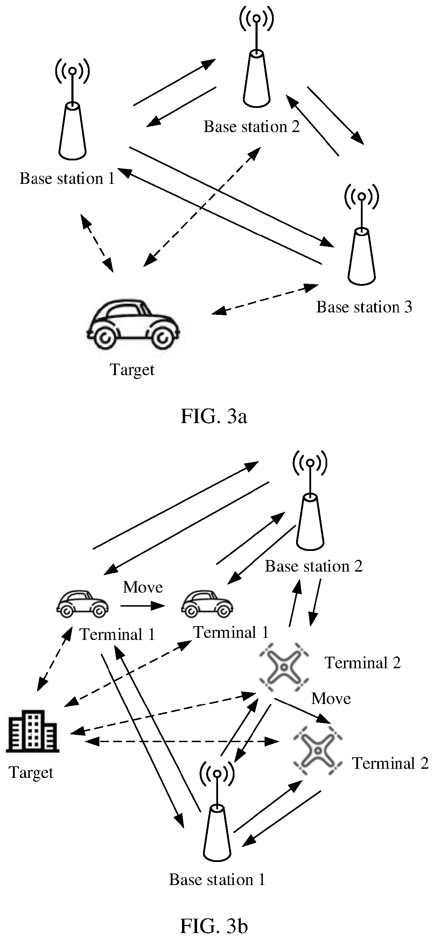

As shown in FIG. 3a, a sensing mode is a self-sending and self-receiving mode. A base station 1 to a base station 3 are three sending measurement nodes, and are also three receiving measurement nodes, that is, N=M=3. The three base stations may all perform joint sensing on a target (for example, a vehicle).

As shown in FIG. 3b, a sensing mode is an A-sending and B-receiving mode, a base station 1 and a base station 2 serve as two receiving measurement nodes, and a terminal 1 and a terminal 2 serve as two sending measurement nodes, that is, N=M=2. The two base stations and the two terminals may perform joint sensing on a target (for example, a building).

It should be noted that the solutions in embodiments of this application are also applied to another communication system, and a corresponding name may be replaced with a name of a corresponding function in the another communication system.

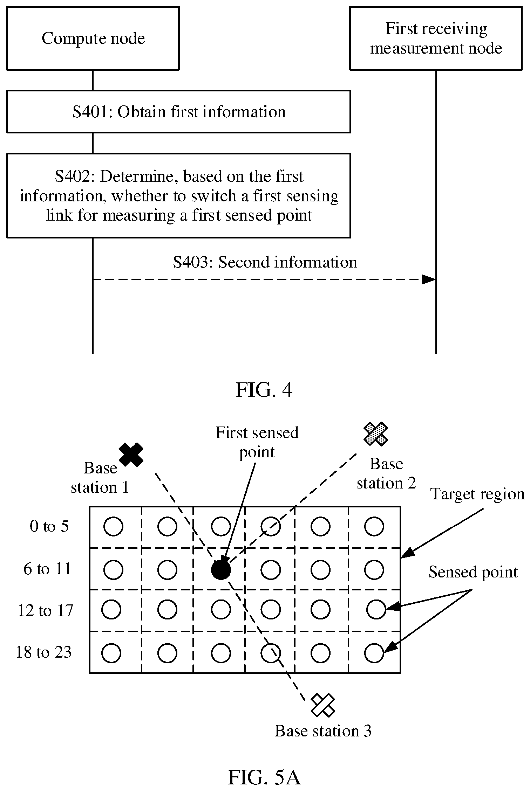

The following describes in detail the multi-node joint sensing method provided in embodiments of this application with reference to FIG. 4 to FIG. 10D.

FIG. 4 is a schematic flowchart of the multi-node joint sensing method according to an embodiment of this application. The communication is described by using interaction between the compute node, the sending measurement node, and the receiving measurement node shown in FIG. 2 as an example. Certainly, a subject that performs an action of the compute node in the method may alternatively be an apparatus/module in the compute node, for example, a chip, a processor, or a processing unit in the compute node. A subject that performs an action of the sending measurement node in the method may alternatively be an apparatus/module in the sending measurement node, for example, a chip, a processor, or a processing unit in the sending measurement node. A subject that performs an action of the receiving measurement node in the method may alternatively be an apparatus/module in the receiving measurement node, for example, a chip, a processor, or a processing unit in the receiving measurement node. This is not specifically limited in embodiments of this application.

As shown in FIG. 4, the multi-node joint sensing method includes the following steps.

S401: The compute node obtains first information.

In this embodiment of this application, the first information indicates a first receiving measurement node to request to determine whether a first sensing link is a sensing link matching a first sensed point. The first sensing link is a sensing link including a first sending measurement node and the first receiving measurement node, the first sensing link is one of K sensing links, and the K sensing links include N sending measurement nodes and M receiving measurement nodes. The first sending measurement node is one of the N sending measurement nodes, and the first receiving measurement node is one of the M receiving measurement nodes.

In other words, the N sending measurement nodes and the M receiving measurement nodes participate in sensing of a target region, the first sensing link is a sensing link for the first receiving measurement node to currently measure the first sensed point, the first sensed point is a sensed point in the target region, and the first information is used to request the compute node to determine whether the sensing link (namely, the first sensing link) for currently measuring the first sensed point is the sensing link matching the first sensed point.

In a scenario in which a sensing mode is self-sending and self-receiving, the M receiving measurement nodes are the N sending measurement nodes. In this case, M=N and is an integer greater than 1. K=M or N. In other words, the M receiving measurement nodes and the N sending measurement nodes are N or M receiving and sending measurement nodes, and one receiving and sending measurement node forms one sensing link. As shown in FIG. 3a or in FIG. 5A, the base station 1 to the base station 3 serve as three receiving and sending measurement nodes, that is, N=M=3. For each sensed point in the target region, the base station 1 to the base station 3 each measure the sensed point by using one sensing link.

In a scenario in which the sensing mode is A-sending and B-receiving, the N sending measurement nodes are different from the M receiving measurement nodes. In this case, N is an integer greater than 1 and M is a positive integer, or N is a positive integer and M is an integer greater than 1. K is less than or equal to N×M. As shown in FIG. 3b, the base station 1 and the base station 2 serve as two sending measurement nodes, and the terminal 1 and the terminal 2 serve as two receiving measurement nodes. That is, N=M=2. The base station 1 may form two sensing links with the terminal 1 and the terminal 2, to measure the sensed point. The base station 2 may form two sensing links with the terminal 1 and the terminal 2, to measure the sensed point.

It should be understood that K being less than N×M may mean that there is an obstacle between the sending measurement node and the receiving measurement node, and no sensing link can be formed. In addition, in some possible scenarios, the sensing mode may be a hybrid mode, that is, both the self-sending and self-receiving mode and the A-sending and B-receiving mode exist. In this case, K is less than N×M. This is not limited.

The target region may be understood as a common region in which the M receiving measurement nodes and the N sending measurement nodes perform sensing or imaging, and the sensed point may be considered as a center point of each grid obtained by evenly dividing the target region based on grids. As shown in FIG. 5A, the target region is divided into 4×6 grids, that is, there are 24 sensed points in the target region. In this embodiment of this application, performing sensed point division on the target region may be considered as performing sensed point division on a target located in the target region, and measuring the sensed point may also be equivalent to measuring a target located at the sensed point.

In this embodiment of this application, the first sensed point is a position at which the target is located in the target region and that is currently obtained by the first receiving measurement node through measurement by using the first sensing link. In other words, the first receiving measurement node determines, by measuring an echo signal obtained after a sensing signal sent by the first sending measurement node interacts with the target, the first sensed point at which the target is located in the target region.

It should be understood that, for one sensing target, the sensing target may be located at more than one sensed point. For a target obtained through measurement at a moment, the target may be located at a plurality of sensed points in the target region. However, for any one of the plurality of sensed points, whether a sensing link currently used for measurement is a sensing link with high sensing accuracy needs to be determined. In this embodiment of this application, one sensed point (namely, the first sensed point) at which the target is located is used as an example for description.

Because one receiving measurement node in the M receiving measurement nodes and one sending measurement node in the N sending measurement nodes may form one sensing link used to measure the first sensed point, the M receiving measurement nodes and the N sending measurement nodes may form K sensing links used to measure the first sensed point. Each of the K sensing links has a different sensing effect (including sensing accuracy, a resolution, and the like) achieved by measuring the first sensed point. Therefore, to achieve a better sensing effect obtained by measuring each sensed point, the compute node selects a sensing link with a better sensing effect from the K sensing links corresponding to the sensed point as a sensing link matching the sensed point.

It should be understood that one sensing link includes one sending measurement node and one receiving measurement node. The sending measurement node sends a sensing signal, and the receiving measurement node receives an echo signal obtained after the sensing signal interacts with a target, to sense the target located at the sensed point. In addition, for each sensed point in the target region, there are K sensing links that can be used to measure the sensed point and that include the N sending measurement nodes and the M receiving measurement nodes. For different sensed points, values of K may be different. For the K sensing links for measuring different sensed points, sensing links including same sending measurement nodes and same receiving measurement nodes are considered as a same sensing link. In other words, a same sensing link may be used to measure different sensed points.

In a possible design solution 1, the compute node may be the first sending measurement node. In this case, the compute node receives the first information from the first receiving measurement node. In other words, the compute node determines, based on triggering of the first receiving measurement node, whether the first sensing link is the sensing link matching the first sensed point.

In a possible design solution 2, the compute node may be the first receiving measurement node. In this case, the compute node (namely, the first receiving measurement node) locally obtains the first information, that is, the compute node obtains, through measurement by using the first sensing link, that the target is located at the first sensed point, and locally determines whether the first sensing link is the sensing link matching the first sensed point.

In a possible design solution 3, the compute node is a node other than the first receiving measurement node and the first sending measurement node.

In the design solution 3, in a possible implementation 1, the compute node may be an independent node other than the N sending measurement nodes and the M receiving measurement nodes.

In a possible implementation 2, the compute node may be a sending measurement node (for example, a second sending measurement node) other than the first sending measurement node in the N sending measurement nodes, or the compute node may be a receiving measurement node (for example, a second receiving measurement node) other than the first receiving measurement node in the M receiving measurement nodes.

In this case, the compute node receives the first information from the first receiving measurement node. In other words, the compute node determines, based on triggering of the first receiving measurement node, whether the first sensing link is the sensing link matching the first sensed point.

For example, the first information may include information indicating the first sensing link and information indicating the first sensed point. The information indicating the first sensing link may be an identifier of the first sensing link or identifiers of the first sending measurement node and the first receiving measurement node that form the first sensing link, and the information indicating the first sensed point may be an index or an identifier of a position of the first sensed point in the target region. This is not limited.

In this embodiment of this application, the sensing link matching the first sensed point is determined from the K sensing links based on a first sensing parameter respectively corresponding to the N sending measurement nodes and a second sensing parameter respectively corresponding to the M receiving measurement nodes.

In the design solution 1, the compute node (namely, the first sending measurement node) may receive a first sensing parameter respectively corresponding to N-1 sending measurement nodes other than the first sending measurement node in the N sending measurement nodes, and the second sensing parameter respectively corresponding to the M receiving measurement nodes.

In the design solution 2, the compute node (namely, the first receiving measurement node) may receive the first sensing parameter respectively corresponding to the N sending measurement nodes and a second sensing parameter respectively corresponding to M-1 receiving measurement nodes other than the first receiving measurement node in the M receiving measurement nodes.

In the implementation 1 of the design solution 3, the compute node receives the first sensing parameter respectively corresponding to the N sending measurement nodes and the second sensing parameter respectively corresponding to the M receiving measurement nodes. In the implementation 2, the compute node (namely, the second sending measurement node) may receive a first sensing parameter respectively corresponding to the N-1 sending measurement nodes other than the second sending measurement node in the N sending measurement nodes, and the second sensing parameter respectively corresponding to the M receiving measurement nodes. Alternatively, the compute node (namely, the second receiving measurement node) may receive the first sensing parameter respectively corresponding to the N sending measurement nodes and a second sensing parameter respectively corresponding to M-1 receiving measurement nodes other than the second receiving measurement node in the M receiving measurement nodes.

The first sensing parameter corresponding to the first sending measurement node in the N sending measurement nodes includes a first sensing resolution unit area of the first sensed point with respect to the first sending measurement node, and the second sensing parameter corresponding to the first receiving measurement node in the M receiving measurement nodes includes a second sensing resolution unit area of the first sensed point with respect to the first receiving measurement node and status information of the first sensing link.

The first sensing resolution unit area of the first sensed point with respect to the first sending measurement node and the second sensing resolution unit area of the first sensed point with respect to the first receiving measurement node are used to determine a sensing resolution unit volume of the first sensed point with respect to the first sensing link. In other words, for a sensing link, a sensing resolution achieved by measuring a sensed point is indicated by a unit volume calculated based on sensing resolution unit areas of receiving and sending measurement nodes that are included in the sensing link with respect to the sensed point. A smaller volume indicates a higher sensing resolution of the sensing link.

For each sensed point, the sensed point sensed by the sending measurement node and the receiving measurement node usually has a small area. The sensed small area is a sensing resolution unit area. A smaller area indicates a higher sensing resolution of the sensed point. Therefore, the first sensing resolution unit area of the first sensed point with respect to the first sending measurement node is used to feed back a sensing resolution achieved by the first sending measurement node for the first sensed point, and the second sensing resolution unit area of the first sensed point with respect to the first receiving measurement node is used to feed back a sensing resolution achieved by the first receiving measurement node for the first sensed point.

The first sensing resolution unit area of the first sensed point with respect to the first sending measurement node may satisfy the following relationship: ${S}_{tx}^{i} \left(n\right) = sin \left(\vec{A}, \vec{{R}_{tx , n}^{i}}\right) ⋅ {R}_{tx , n}^{i} ⋅ {δ}_{r} ⋅ {δ}_{a}$ , where i is a sequence number of the first sensed point, n is a sequence number of the first sending measurement node in the N sending measurement nodes, 1≤n≤N, i and n are integers, ***A̅*** is an azimuth unit vector, $\vec{{R}_{tx , n}^{i}}$ is a vector from the first sending measurement node to the first sensed point, $sin \left(\vec{A}, \vec{{R}_{tx , n}^{i}}\right)$ is a sine value of an included angle between the azimuth unit vector and the vector from the first sending measurement node to the first sensed point, ${R}_{tx , n}^{i}$ is a modulus value of $\vec{{R}_{tx , n}^{i}}$, ***δᵣ*** is a range resolution, and ***δₐ*** is an azimuth angle resolution.

The second sensing resolution unit area of the first sensed point with respect to the first receiving measurement node may satisfy the following relationship: ${S}_{rx}^{i} \left(m\right) = sin \left(\vec{E}, \vec{{R}_{r x , m}^{i}}\right) ⋅ {R}_{rx , m}^{i} ⋅ {δ}_{r} ⋅ {δ}_{e}$ , where m is a sequence number of the first receiving measurement node in the M receiving measurement nodes, 1≤m≤M, m is an integer, ***̅E̅*̅** is an elevation vector, $\vec{{R}_{r x , m}^{i}}$ is a vector from the first receiving measurement node to the first sensed point, ${R}_{rx , m}^{i}$ is a modulus of $\vec{{R}_{r x , m}^{i}}$, ***δᵣ*** is the range resolution, and ***δₑ*** is an elevation angular resolution. ${δ}_{r} = {k}_{r} ⋅ \frac{c}{BW}$, where *kᵣ* is a constant with a specific value being related to a signal waveform and the like. c is a speed of light, and c = 3 × 10⁸ m/s. BW is an available bandwidth, in hertz (Hz), of the (sending or receiving) measurement node.${δ}_{a} = {k}_{a} ⋅ \frac{λ}{{D}_{a}} cos {θ}_{a} , λ = \frac{c}{{f}_{c}} , {δ}_{e} = {k}_{e} ⋅ \frac{λ}{{D}_{e}} cos {θ}_{e}$, *k**ₐ*** and *kₑ* are constants with values being related to an antenna element pattern of the (sending or receiving) measurement node, *λ* is a wavelength corresponding to a center frequency, *Dₐ* is an azimuth antenna aperture size of the (sending or receiving) measurement node, *Dₑ* is a pitch antenna aperture size of the (sending or receiving) measurement node, *Dₐ* and *Dₑ* are expressed in meters (m), *f_{c}* is a center frequency of the (sending or receiving) measurement node, expressed in hertz (Hz), *θₐ* is an azimuth formed between the (sending or receiving) measurement node and the first sensed point, and *θₑ* is an elevation angular formed between the (sending or receiving) measurement node and the first sensed point.

The sensing resolution unit volume of the first sensed point with respect to the first sensing link may satisfy the following relationship: ${v}_{n , m}^{i} = \frac{{S}_{tx}^{i} \left(n\right) ⋅ {S}_{rx}^{i} \left(m\right)}{{δ}_{r}}$, where ${v}_{n , m}^{i}$ is the sensing resolution unit volume of the first sensed point with respect to the first sensing link, and ***δᵣ*** is the range resolution.

The status information of the first sensing link may be a signal to interference plus noise ratio (signal to interference plus noise ratio, SINR) of the first sensing link, and is used to feed back a signal attenuation status of the first sensing link. The status information of the first sensing link may be indicated as ${SNR}_{n \to m}^{i}$. The status information of the first sensing link is used to determine sensing accuracy of the first sensed point with respect to the first sensing link.

The sensing accuracy of the first sensed point with respect to the first sensing link may satisfy the following relationship: $Var \left({v}_{n , m}^{i}\right) = \frac{{v}_{n , m}^{i}}{\sqrt{{SNR}_{n \to m}^{i}}}$, where $Var \left({v}_{n , m}^{i}\right)$ is the sensing accuracy of the first sensed point with respect to the first sensing link.

Therefore, the compute node may determine, based on the first sensing parameter respectively corresponding to the N sending measurement nodes and the second sensing parameter respectively corresponding to the M receiving measurement nodes that are obtained, a sensing resolution unit volume and sensing accuracy on each of the K sensing links with respect to the first sensed point.

Further, the compute node may determine, based on the sensing resolution unit volume and sensing accuracy on each of the K sensing links with respect to the first sensed point, the sensing link matching the first sensed point.

In a possible implementation, the compute node may determine K weighted values based on the sensing resolution unit volume and sensing accuracy on each of the K sensing links with respect to the first sensed point. In other words, each sensing link corresponds to one weighted value, and the K weighted values respectively correspond to the K sensing links. A weighted value of the first sensed point with respect to the first sensing link in the K weighted values is determined based on the sensing resolution unit volume of the first sensed point with respect to the first sensing link and the sensing accuracy of the first sensed point with respect to the first sensing link.

The weighted value of the first sensed point with respect to the first sensing link in the K weighted values may satisfy the following relationship: ${Δ}_{n , m}^{i} = {w}_{k} ⋅ {v}_{n , m}^{i} + Var \left({v}_{n , m}^{i}\right)$*,* where ${Δ}_{n , m}^{i}$ is the weighted value of the first sensed point with respect to the first sensing link, and is *wₖ* a weighting coefficient. It should be understood that, to ensure comparison accuracy, a same weighting coefficient is usually used to compute a weighted value corresponding to each sensing link.

Therefore, the compute node uses, as the sensing link matching the first sensed point, a sensing link corresponding to a smallest weighted value in the K weighted values. Each weighted value may represent quality of sensing (sensing of quality, QoSS) of one sensing link with respect to the first sensed point. The smallest weighted value represents a sensing link with optimal quality of sensing in the K sensing links, and the sensing link serves as the sensing link matching the first sensed point. In other words, the weighted value corresponding to the sensing link matching the first sensed point is the smallest value in the K weighted values.

In a specific example 1, the sensing mode is a self-sending and self-receiving mode, and N=M=3, that is, three receiving and sending measurement nodes form three sensing links (Tx1 to Rx1, Tx2 to Rx2, and Tx3 to Rx3). The compute node obtains, through computation based on a first sensing parameter and a second sensing parameter that correspond to each of the three receiving and sending measurement nodes, three weighted values of the first sensed point with respect to the three sensing links: ${Δ}_{1 , 1}^{i} , {Δ}_{2 , 2}^{i}$, and ${Δ}_{3 , 3}^{i}$, and ${Δ}_{2 , 2}^{i} < {Δ}_{1 , 1}^{i} < {Δ}_{3 , 3}^{i}$, that is, $min \left({Δ}_{1 , 1}^{i}, {Δ}_{2 , 2}^{i}, {Δ}_{3 , 3}^{i}\right) = {Δ}_{2 , 2}^{i}$. In this case, the compute node determines that the sensing link Tx2 to Rx2 is the sensing link matching the first sensed point, and the quality of sensing is ${Δ}_{2 , 2}^{i}$.

In a specific example 2, the sensing mode is an A-sending and B-receiving mode, N=2, M=3, and K=6, that is, two sending measurement nodes (Tx1 and Tx2) and three receiving measurement nodes (Rx1 to Rx3) may form six sensing links (Tx1 to Rx1, Tx1 to Rx2, Tx1 to Rx3, Tx2 to Rx1, Tx2 to Rx2, and Tx2 to Rx3). The compute node obtains, through computation based on a first sensing parameter respectively corresponding to the two sending measurement nodes and a second sensing parameter respectively corresponding to the three receiving measurement nodes, six weighted values of the first sensed point with respect to the six sensing links: ${Δ}_{1 , 1}^{i} , {Δ}_{1 , 2}^{i} , {Δ}_{1 , 3}^{i} , {Δ}_{2 , 1}^{i} , {Δ}_{2 , 2}^{i}$, and ${Δ}_{2 , 3}^{i}$, and ${Δ}_{1 , 2}^{i} < {Δ}_{1 , 1}^{i} < {Δ}_{2 , 3}^{i} < {Δ}_{2 , 1}^{i} < {Δ}_{1 , 3}^{i} < {Δ}_{2 , 2}^{i}$, that is, $min \left({Δ}_{1 , 1}^{i}, {Δ}_{1 , 2}^{i}, {Δ}_{1 , 3}^{i}, {Δ}_{2 , 1}^{i}, {Δ}_{2 , 2}^{i}, {Δ}_{2 , 3}^{i}\right) = {Δ}_{1 , 2}^{i}$. In this case, the compute node determines that the sensing link Tx1 to Rx2 is the sensing link matching the first sensed point, and the quality of sensing is ${Δ}_{1 , 2}^{i}$.

It should be understood that the first sensing parameter corresponding to the first sending measurement node may further include a first sensing resolution unit area of the first sending measurement node with respect to each sensed point other than the first sensed point in the target region, and the second sensing parameter corresponding to the first receiving measurement node may further include a second sensing resolution unit area of the first sending measurement node with respect to each sensed point other than the first sensed point in the target region. Therefore, the compute node may determine, based on the foregoing computational process related to the first sensed point, a sensing resolution unit volume and sensing accuracy of each sensed point other than the first sensed point in the target region with respect to K sensing links for the sensed point, to determine a sensing link matching the sensed point in the target region.

In this embodiment of this application, each of the K sensing links may match one or more sensed points in the target region. The first sensing link is used as an example. At least one sensed point matching the first sensing link forms a sub-region in the target region, and the sub-region is provided with a measurement service by the first sensing link. Correspondingly, one or more sensed points (including the first sensed point) that match the sensing link matching the first sensed point also form a sub-region in the target region, and the sub-region is provided with a measurement service by the sensing link matching the first sensed point. In other words, each of the K sensing links corresponds to one sub-region in the target region. For each sensed point in the sub-region, a sensing effect achieved by measuring the sensed point by using a sensing link matching the sensed point is good.

Optionally, the compute node may store boundary absolute coordinates of the sub-region to represent the sub-region.

The compute node allocates, based on a sensing resolution and sensing accuracy of each sensing link for the sensed point in the target region, the sensed point in the target region to a sensing link with a better sensing effect. In this embodiment of this application, dividing the sensed point may be understood as dividing the target region. Each sensing link is used for measuring the sensed point in the divided region. Measuring the sensed point is measuring a target located at the sensed point.

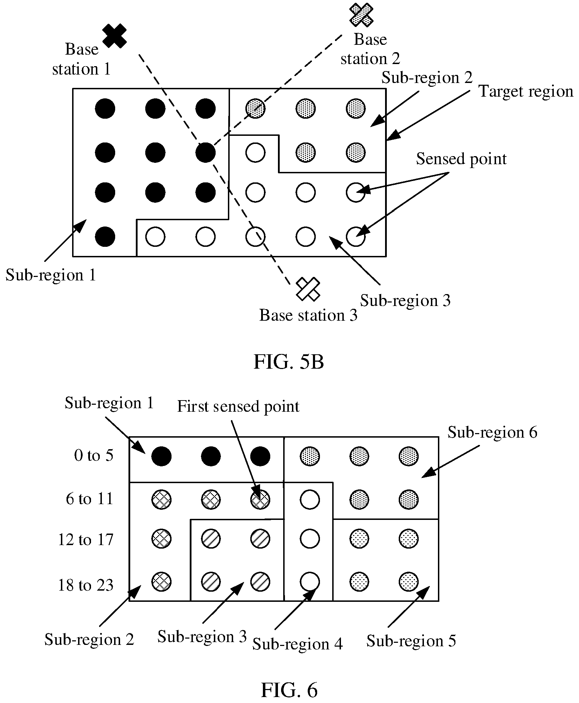

As shown in FIG. 5B, the sensing mode is a self-sending and self-receiving mode. The base station 1 to the base station 3 serve as three receiving and sending measurement nodes and correspond to three sensing links. The compute node divides the target region into three sub-regions based on a sensing parameter sent by the compute node. The base station 1 corresponds to a sub-region 1, the base station 2 corresponds to a sub-region 2, and the base station 3 corresponds to a sub-region 3. In other words, the base station 1 (equivalent to the sensing link 1) is used for measuring a sensed point in the sub-region 1, the base station 2 (equivalent to the sensing link 2) is used for measuring a sensed point in the sub-region 2, and the base station 3 (equivalent to the sensing link 3) is used for measuring a sensed point in the sub-region 3. The base station 1 to the base station 3 jointly sense a target in the target region, to achieve high sensing accuracy and a high sensing resolution.

In this embodiment of this application, the sub-region may also be referred to as a sensing sub-region, a service sub-region, a measurement sub-region, a sensing cell (sensing cell), a measurement cell, or the like. This is not limited.

Therefore, the compute node may determine a sensing link matching each sensed point, or a sub-region (including at least one matched sensed point) matching each sensing link, and locally store a correspondence between a sub-region obtained through division or the sensed point and the sensing link. The correspondence may include an identifier of the sensing link, an identifier of the sub-region, an identifier of the sensed point included in the sub-region, quality of sensing (for example, a weighted value) of the sensing link with respect to the sub-region or the sensed point in the sub-region, quality of sensing of the sensing link with respect to each sensed point in the target region, or the like. This is not limited. The identifier of the sensing link may alternatively be identifiers of a sending measurement node and a receiving measurement node that are included in the sensing link. The quality of sensing of the sensing link with respect to the sub-region may be an average value or a weighted value of quality of sensing of the sensing link with respect to each sensed point in the sub-region. This is not limited.

Refer to the foregoing example 1. The sensing mode is self-sending and self-receiving, the target region is shown in FIG. 5A, the target region includes 24 sensed points (0 to 23), sub-regions obtained through division of three sensing links are shown in FIG. 5B, and a correspondence between a sub-region or a sensed point and a sensing link may be shown in the following Table 1. For each sensed point, quality of sensing corresponding to the sensed point is a smallest value of quality of sensing of the sensed point with respect to the three sensing links. For example, for a sensed point whose ID is 1, quality of sensing of the sensed point with respect to the three sensing links is ${Δ}_{1 , 1}^{1} , {Δ}_{2 , 2}^{1}$, and ${Δ}_{3 , 3}^{1}$, and ${Δ}_{1 , 1}^{1}$ is a smallest value in ${Δ}_{1 , 1}^{1} , {Δ}_{2 , 2}^{1}$, and ${Δ}_{3 , 3}^{1}$.

**Table 1**

| Sensing link ID | Sub-region ID | ID of a sensed point included in a sub-region | Quality of sensing |
|---|---|---|---|
| Link1 ID (Tx1 to Rx1) | Cell ID1 | 0, 1, 2, 6, 7, 8, 12, 13, 14, 18 | ${Δ}_{1 , 1}^{0} , {Δ}_{1 , 1}^{1} , {Δ}_{1 , 1}^{2} , {Δ}_{1 , 1}^{6} , {Δ}_{1 , 1}^{7}$ , ${Δ}_{1 , 1}^{8} , {Δ}_{1 , 1}^{12} , {Δ}_{1 , 1}^{13} , {Δ}_{1 , 1}^{14} , {Δ}_{1 , 1}^{18}$ |
| Link2 ID (Tx2 to Rx2) | Cell ID2 | 3, 4, 5, 10, 11 | ${Δ}_{2 , 2}^{3} , {Δ}_{2 , 2}^{4} , {Δ}_{2 , 2}^{5} , {Δ}_{2 , 2}^{10} , {Δ}_{2 , 2}^{11}$ |
| Link3 ID (Tx3 to Rx3) | Cell ID3 | 9, 15, 16, 17, 19, 20, 21, 22, 23 | ${Δ}_{3 , 3}^{9} , {Δ}_{3 , 3}^{15} , {Δ}_{3 , 3}^{16} , {Δ}_{3 , 3}^{17} , {Δ}_{3 , 3}^{19}$ , ${Δ}_{3 , 3}^{20} , {Δ}_{3 , 3}^{21} , {Δ}_{3 , 3}^{22} , {Δ}_{3 , 3}^{23}$ |

Refer to the foregoing example 2. The sensing mode is A-sending and B-receiving, the target region is shown in FIG. 5A, the target region includes 24 sensed points (0 to 23), sub-regions obtained through division of six sensing links are shown in FIG. 6, and a correspondence between a sub-region or a sensed point and a sensing link may be shown in the following Table 2. For each sensed point, quality of sensing corresponding to the sensed point is a smallest value of quality of sensing of the sensed point with respect to the six sensing links. For example, for a sensed point whose ID is 1, quality of sensing of the sensed point with respect to the six sensing links is ${Δ}_{1 , 1}^{1} , {Δ}_{1 , 2}^{1} , {Δ}_{1 , 3}^{1} , {Δ}_{2 , 1}^{1} , {Δ}_{2 , 2}^{1}$, and ${Δ}_{2 , 3}^{1}$, and ${Δ}_{1 , 1}^{1}$ is a smallest value in ${Δ}_{1 , 1}^{1} , {Δ}_{1 , 2}^{1} , {Δ}_{1 , 3}^{1} , {Δ}_{2 , 1}^{1} , {Δ}_{2 , 2}^{1}$, and ${Δ}_{2 , 3}^{1}$.

**Table 2**

| Sensing link ID | Sub-region ID | ID of a sensed point in a sub-region | Quality of sensing |
|---|---|---|---|
| Link1 ID (Tx1 to Rx1) | Cell ID1 | 0, 1, 2 | ${Δ}_{1 , 1}^{0} , {Δ}_{1 , 1}^{1} , {Δ}_{1 , 1}^{2}$ |
| Link2 ID (Tx1 to Rx2) | Cell ID2 | 6, 7, 8, 12, 18 | ${Δ}_{1 , 2}^{6} , {Δ}_{1 , 2}^{7} , {Δ}_{1 , 2}^{8} , {Δ}_{1 , 2}^{12} , {Δ}_{1 , 2}^{18}$ |
| Link3 ID (Tx1 to Rx3) | Cell ID3 | 13, 14, 19, 20 | ${Δ}_{1 , 3}^{13} , {Δ}_{1 , 3}^{14} , {Δ}_{1 , 3}^{19} , {Δ}_{1 , 3}^{20}$ |
| Link4 ID (Tx2 to Rx1) | Cell ID4 | 9, 15, 21 | ${Δ}_{2 , 1}^{9} , {Δ}_{2 , 1}^{15} , {Δ}_{2 , 1}^{19}$ |
| Link5 ID (Tx2 to Rx2) | Cell ID5 | 16, 17, 22, 23 | ${Δ}_{2 , 2}^{16} , {Δ}_{2 , 2}^{17} , {Δ}_{2 , 2}^{22} , {Δ}_{2 , 2}^{23}$ |
| Link6 ID (Tx2 to Rx3) | Cell ID5 | 3, 4, 5, 10, 11 | ${Δ}_{3 , 3}^{3} , {Δ}_{3 , 3}^{4} , {Δ}_{3 , 3}^{5} , {Δ}_{3 , 3}^{10} , {Δ}_{3 , 3}^{11}$ |

Therefore, after obtaining the first information, the compute node may determine, based on the first information, whether the first sensing link for currently measuring the first sensed point is the sensing link matching the first sensed point, to determine whether to switch the first sensing link for measuring the first sensed point. For a specific implementation, refer to the following description in S402. Details are not described herein again.

S402: The compute node determines, based on the first information, whether to switch the first sensing link for measuring the first sensed point.

For example, after receiving the first information, the compute node may determine, from the stored correspondence between the sensed point and the sensing link based on the first sensed point and the first sensing link that are indicated in the first information, a sensing link matching the first sensed point, and determine whether the sensing link matching the first sensed point is the first sensing link, to determine, based on a determining result, whether to switch the first sensing link for measuring the first sensed point.

In other words, when the first sensing link is the sensing link matching the first sensed point, the compute node determines that the first sensing link does not need to be switched. When the first sensing link is not the sensing link matching the first sensed point, the compute node determines that the first sensing link for measuring the first sensed point needs to be switched, and switches from the first sensing link to the sensing link matching the first sensed point. Based on different scenarios, implementations of whether the compute node triggers a sensing link are different. For details, refer to related descriptions in the following S403. Details are not described herein again.

Further, the method provided in this embodiment of this application may further include the following step:

S403: The compute node sends second information to the first receiving measurement node. Correspondingly, the first receiving measurement node receives the second information from the compute node.

The second information indicates whether to switch the first sensing link for measuring the first sensed point. Because whether to switch the sensing link is determined by a matching status between the first sensing link and the sensing link matching the first sensed point, alternatively, the second information indicates whether the first sensing link is the sensing link matching the first sensed point, to feed back whether the first sensing link needs to be switched. In other words, when the first sensing link is the sensing link matching the first sensed point, the second information indicates not to switch the first sensing link for measuring the first sensed point, to indicate that the first receiving measurement node does not need to perform sensing link switching. When the first sensing link is not the sensing link matching the first sensed point, the second information indicates to switch the first sensing link for measuring the first sensed point, to indicate that the first receiving measurement node performs sensing link switching.

In a possible implementation, the second information may directly indicate whether the first receiving measurement node performs sensing link switching. In this case, the second information may include information indicating a switching status and information indicating the sensing link matching the first sensed point. For example, the information indicating the switching status is one bit. For example, when a bit value is 1, it indicates that the first sensing link is switched, or when a bit value is 0, it indicates that the first sensing link is not switched. The information indicating the sensing link matching the first sensed point may be an identifier of the sensing link matching the first sensed point, or an identifier of a sending measurement node and an identifier of a receiving measurement node that are included in the sensing link matching the first sensed point.

In another possible implementation, the second information indirectly notifies the first receiving measurement node of a switching status (or a matching status) of a sensing link. In this case, the second information may include an identifier of the first sensing link, quality of sensing of the first sensed point with respect to the first sensing link, an identifier of the sensing link matching the first sensing link, quality of sensing of the first sensed point with respect to the sensing link matching the first sensing link, and the like. This is not limited. For example, a format of the second information is as follows:

| | | | |
|---|---|---|---|
| MeasID | | | |
| | SensingLinkID | | Link ID |
| | MeasResultSensingLink | | |
| | | QoSS | ${Δ}_{n 1 , m 1}^{i}$ |
| | MeasResultBestSensingLir | | |
| | BestSensingLinkID | | Link ID |
| | | QoSS | ${Δ}_{n 2 , m 2}^{i}$ |

SensingLinkID is an ID of the first sensing link, QoSS in MeasResultSensingLink indicates quality of sensing (for example, ${Δ}_{n 1 , m 1}^{i}$) of the first sensing link with respect to the first sensed point, and MeasResultBestSensingLink is information about the sensing link matching the first sensed point, and includes BestSensingLinkID indicating an ID of the sensing link matching the first sensed point and quality of sensing QoSS (for example, ${Δ}_{n 2 , m 2}^{i}$) of the first sensed point with respect to the sensing link matching the first sensed point. Further, the link ID may be mapped to a sending measurement node ID and a receiving measurement node ID that correspond to the link ID.

In this implementation, after obtaining the second information, the first receiving measurement node determines, by comparing the identifier and/or quality of sensing of the first sensing link with the identifier and/or quality of sensing of the sensing link matching the first sensed point, whether the first sensing link is the sensing link matching the first sensed point, to determine whether to switch the first sensing link.

When it is determined not to switch the first sensing link for measuring the first sensed point, in other words, when the first sensing link is the sensing link matching the first sensed point, the first sending measurement node and the first receiving measurement node are a sending measurement node and a receiving measurement node that belong to the sensing link matching the first sensed point. In this case:

In the foregoing design solution 1, the compute node (namely, the first sending measurement node) continues to measure the target located at the first sensed point, that is, sends a sensing signal to the first sensed point.

In a scenario in which the sensing mode is self-sending and self-receiving, the first receiving measurement node is the first sending measurement node. In this case, the first receiving measurement node also continues to measure the target located at the first sensed point, that is, receives an echo signal that is sent by the first sending measurement node and that is obtained after the sensing signal interacts with the target, to measure the target located at the first sensed point. In this case, the compute node may not need to send the second information.

In a scenario in which the sensing mode is A-sending and B-receiving, the compute node may send the second information to the first receiving measurement node. Correspondingly, the first receiving measurement node receives the second information from the compute node. In this case, the second information indicates not to switch the first sensing link for measuring the first sensed point, that is, indicates that the first sensing link is the sensing link matching the first sensed point.

In Example 2, the compute node (namely, the first sending measurement node) is Tx1, the first receiving measurement node is Rx2, the first sensing link is Tx1 to Rx2, namely, Link2, the first sensed point is a sensed point whose sequence number is 8 in the target region, and the sensing link matching the first sensed point is also Link2. A format of the second information is as follows:

| | | | |
|---|---|---|---|
| MeasID | | | |
| | SensingLinkID | | Link2 ID |
| | MeasResultSensingLink | | |
| | | QoSS | ${Δ}_{1 , 2}^{8}$ |
| | MeasResultBestSensingLink | | |
| | BestSensingLinkID | | Link2 ID |
| | | QoSS | ${Δ}_{1 , 2}^{8}$ |

Therefore, after receiving the second information, the first receiving measurement node may determine that the first sensing link is the sensing link matching the first sensed point, to continue to receive the echo signal that is sent by the first sending measurement node and that is obtained after the sensing signal interacts with the target, to measure the target located at the first sensed point.

In the foregoing design solution 2, the compute node (namely, the first receiving measurement node) continues to measure the target located at the first sensed point, that is, receives the echo signal that is sent by the first sending measurement node and that is obtained after the sensing signal interacts with the target, to measure the target located at the first sensed point.

In a scenario in which the sensing mode is self-sending and self-receiving, the first receiving measurement node is the first sending measurement node. In this case, the compute node (namely, the first sending measurement node) also continues to measure the target located at the first sensed point, that is, sends the sensing signal to the target located at the first sensed point. In this case, the compute node does not need to send the second information.

It should be understood that, in the design solution 2, because the first sensing link is the sensing link matching the first sensed point, and the compute node is the first receiving measurement node, in the scenario in which the sensing mode is A-sending and B-receiving, the compute node does not need to send the second information either.

In the foregoing design solution 3, the compute node is a node other than the first receiving measurement node and the first sending measurement node. Similar to the foregoing design solution 1, the compute node may send the second information to the first receiving measurement node, to notify the first receiving measurement node that the first sensing link is the sensing link matching the first sensed point. In other words, the first receiving measurement node and the first sending measurement node are a sending measurement node and a receiving measurement node on the sensing link matching the first sensed point, and measurement node switching does not need to be performed, that is, the first sensing link does not need to be switched. For related descriptions of the second information, refer to the specific descriptions in the foregoing design solution 1. Details are not described again.

When it is determined to switch the first sensing link for measuring the first sensed point, in other words, when the first sensing link is not the sensing link matching the first sensed point, there are the following three cases:
Case 1: The first receiving measurement node is a receiving measurement node on the sensing link matching the first sensed point, but the first sending measurement node is a sending measurement node that does not belong to the sensing link matching the first sensed point.
Case 2: The first sending measurement node is a sending measurement node on the sensing link matching the first sensed point, but the first receiving measurement node is a receiving measurement node that does not belong to the sensing link matching the first sensed point.
Case 3: Neither the first sending measurement node nor the first receiving measurement node is a sending or receiving measurement node that belongs to the sensing link matching the first sensed point.

It should be understood that, when the sensing mode is self-sending and self-receiving, only the foregoing case 3 exists.

In the foregoing design solution 1, the compute node is the first sending measurement node.

In a scenario in which the sensing mode is self-sending and self-receiving, the first receiving measurement node is the first sending measurement node. The compute node (namely, the first sending measurement node) does not need to send the second information. After locally determining that the first sensing link is not the sensing link matching the first sensed point, the compute node sends third information or fourth information to receiving and sending measurement nodes that belong to the sensing link matching the first sensed point. The third information or the fourth information indicates the receiving and sending measurement nodes on the sensing link matching the first sensed point to measure the first sensed point.

In a scenario in which the sensing mode is A-sending and B-receiving, the compute node may send the second information to the first receiving measurement node. In this case, the second information indicates to switch the first sensing link for measuring the first sensed point, that is, indicates that the first sensing link is not the sensing link matching the first sensed point.

Therefore, after receiving the second information, the first receiving measurement node determines, based on the second information, that the first sensing link is not the sensing link matching the first sensed point, and that sensing link switching needs to be performed, to determine, based on the sensing link matching the first sensed point in the second information, a measurement node that needs to be switched.

In the foregoing case 1, the first receiving measurement node determines that the first receiving measurement node is a receiving measurement node on the sensing link matching the first sensed point, but the first sending measurement node is a sending measurement node that is not on the sensing link matching the first sensed point. In this case, because the compute node is the first sending measurement node, the first sending measurement node may locally determine that the first sending measurement node is a sending measurement node that does not belong to the sensing link matching the first sensed point. Therefore, the first receiving measurement node does not need to send the second information to the first sending measurement node.

In the scenario of Example 2, the compute node (namely, the first sending measurement node) is Tx2, the first receiving measurement node is Rx2, the first sensing link is Tx2 to Rx2, namely, Link5, the first sensed point is a sensed point whose sequence number is 8 in the target region, and the sensing link matching the first sensed point is Tx1 to Rx2, namely, Link1. In this case, a format of the second information is as follows:

| | | | |
|---|---|---|---|
| MeasID | | | |
| | SensingLinkID | | Link5 ID |
| | MeasResultSensingLink | | |
| | | QoSS | ${Δ}_{2 , 2}^{8}$ |
| | MeasResultBestSensingLink | | |
| | BestSensingLinkID | | Link2 ID |
| | | QoSS | ${Δ}_{1 , 2}^{8}$, where |

${Δ}_{2 , 1}^{8} < {Δ}_{1 , 1}^{8}$. Therefore, the first receiving measurement node may determine, based on the second information, that the first receiving measurement node does not need to perform measurement node switching. In the following design solutions, about examples of the second information in the cases 1 to 3, refer to the descriptions of the example of the second information in the case 1 in the design solution 1. Details are not described below again.

Further, the first sending measurement node may send the third information to a sending measurement node that belongs to the sensing link matching the first sensed point. Correspondingly, the sending measurement node that belongs to the sensing link matching the first sensed point receives the third information from the first sending measurement node. The third information indicates the sending measurement node that belongs to the sensing link matching the first sensed point to measure the first sensed point. In other words, the first sending measurement node ends measurement of the target located at the first sensed point, and switches the measurement of the target located at the first sensed point to the sending measurement node that belongs to the sensing link matching the first sensed point, to implement switching from the first sensing link to the sensing link matching the first sensed point.

In the foregoing case 2, the first receiving measurement node determines, based on the second information, that the first receiving measurement node is a receiving measurement node that is not on the sensing link matching the first sensed point, but the first sending measurement node is a sending measurement node on the sensing link matching the first sensed point. In this case, because the first sending measurement node is a sending measurement node that belongs to the sensing link matching the first sensed point, the first receiving measurement node does not need to send the second information to the first sending measurement node.

Further, the first receiving measurement node may send the fourth information to a receiving measurement node that belongs to the sensing link matching the first sensed point. Correspondingly, the receiving measurement node that belongs to the sensing link matching the first sensed point receives the fourth information from the first receiving measurement node. The fourth information indicates the receiving measurement node that belongs to the sensing link matching the first sensed point to measure the first sensed point. In other words, the first receiving measurement node ends measurement of the target located at the first sensed point, and switches the measurement of the target located at the first sensed point to the receiving measurement node that belongs to the sensing link matching the first sensed point, to implement switching from the first sensing link to the sensing link matching the first sensed point.

In the foregoing case 3, the first receiving measurement node determines, based on the second information, that neither the first receiving measurement node nor the first sending measurement node is a receiving measurement node on the sensing link matching the first sensed point. In this case, because the compute node is the first sending measurement node, the first sending measurement node may locally determine that the first sending measurement node is a sending measurement node that does not belong to the sensing link matching the first sensed point. Therefore, the first receiving measurement node does not need to send the second information to the first sending measurement node.

Further, the first sending measurement node may send the third information to a sending measurement node that belongs to the sensing link matching the first sensed point, and the first receiving measurement node may send the fourth information to a receiving measurement node that belongs to the sensing link matching the first sensed point. Therefore, the measurement on the first sensed point may be switched to the sensing link matching the first sensed point, that is, switching from the first sensing link to the sensing link matching the first sensed point is implemented.

In the foregoing design solution 2, the compute node is the first receiving measurement node. In a scenario in which the sensing mode is self-sending and self-receiving, an implementation process of the first receiving measurement node is similar to that in the foregoing design solution 1. Details are not described again.

In a scenario in which the sensing mode is A-sending and B-receiving, in the foregoing case 1, the first receiving measurement node may send the second information to the first sending measurement node, and correspondingly, the first sending measurement node may receive the second information from the first receiving measurement node. Therefore, the first sending measurement node may determine, based on the second information, that the first sending measurement node is a sending measurement node that is not on the sensing link matching the first sensed point, and further send the third information to a sending measurement node on the sensing link matching the first sensed point, to implement switching from the first sensing link to the sensing link matching the first sensed point.

In the foregoing case 2, the first receiving measurement node determines that the first receiving measurement node needs to perform measurement node switching, and the first sending measurement node does not need to perform measurement node switching. Therefore, the first receiving measurement node may send the fourth information to a receiving measurement node that belongs to the sensing link matching the first sensed point, to implement switching from the first sensing link to the sensing link matching the first sensed point.

In the foregoing case 3, the first receiving measurement node determines that both the first receiving measurement node and the first sending measurement node need to be switched. In this case, the first receiving measurement node may send the second information to the first sending measurement node, to indicate the first sending measurement node to perform measurement node switching.

Further, the first sending measurement node may send the third information to a sending measurement node that belongs to the sensing link matching the first sensed point, and the first receiving measurement node may send the fourth information to a receiving measurement node that belongs to the sensing link matching the first sensed point, to implement switching from the first sensing link to the sensing link matching the first sensed point.

In the foregoing design solution 3, the compute node is a node other than the first receiving measurement node and the first sending measurement node. In a scenario in which the sensing mode is self-sending and self-receiving, an implementation process of the compute node is similar to that in the foregoing design solution 1. Details are not described again.

In a scenario in which the sensing mode is A-sending and B-receiving, the compute node needs to send the second information to the first receiving measurement node.

After receiving the second information, the first receiving measurement node determines, based on the second information, that the first sensing link is not the sensing link matching the first sensed point, and determines, based on the sensing link matching the first sensed point, whether measurement node switching needs to be performed.

In the foregoing case 1, the first receiving measurement node may send the second information to the first sending measurement node, to indicate the first sending measurement node to perform measurement node switching. Correspondingly, after receiving the second information, the first sending measurement node determines, based on the second information, that the first sending measurement node is a sending measurement node that is not on the sensing link matching the first sensed point. In this case, the first sending measurement node may send the third information to a sending measurement node on the sensing link matching the first sensed point, to implement switching from the first sensing link to the sensing link matching the first sensed point.

After the first sending measurement node is switched to the sending measurement node on the sensing link matching the first sensed point, the first receiving measurement node measures, based on a sensing signal sent by the sending measurement node on the sensing link matching the first sensed point, the target located at the first sensed point. In other words, the first receiving measurement node continues to measure, by using the sensing link matching the first sensed point, the target located at the first sensed point.

In the foregoing case 2, the first receiving measurement node determines, based on the second information, that the first receiving measurement node is a receiving measurement node that is not on the sensing link matching the first sensed point. In this case, the first receiving measurement node may send the fourth information to a receiving measurement node on the sensing link matching the first sensed point, to implement switching from the first sensing link to the sensing link matching the first sensed point.

In the foregoing case 3, the first receiving measurement node determines, based on the second information, that neither the first receiving measurement node nor the first sending measurement node is a sending or receiving measurement node on the sensing link matching the first sensed point. In this case, the first receiving measurement node may send the second information to the first sending measurement node, to indicate the first sending measurement node to perform measurement node switching. In addition, the first receiving measurement node may send the fourth information to a receiving measurement node that belongs to the sensing link matching the first sensed point. Correspondingly, after receiving the second information, the first sending measurement node may send the third information to a sending measurement node that belongs to the sensing link matching the first sensed point. Therefore, switching from the first sensing link to the sensing link matching the first sensed point can be implemented.

Based on the multi-node joint sensing method shown in FIG. 4, the N sending measurement nodes and the M receiving measurement nodes that participate in joint sensing may form K sensing links. The compute node may match, based on sensing parameters of the N sending measurement nodes and the M receiving measurement nodes that participate in the joint sensing, a sensing link with a high sensing resolution and high sensing accuracy for each sensed point in the target region to measure the sensed point. Therefore, the compute node may determine, based on the obtained first information, whether a sensing link for currently measuring the first sensed point is a sensing link matching the first sensed point, and indicate, based on a matching status, whether a receiving measurement node that belongs to the sensing link for currently measuring the first sensed point triggers sensing link switching, to allocate each sensed point to a sensing link matching the sensed point for measurement. This can enhance a sensing resolution and sensing accuracy of a sensing result.

The following describes in detail the multi-node joint sensing method shown in FIG. 4 in combination with different application scenarios.

The scenario shown in FIG. 5A and FIG. 5B is used as an example. The compute node is an independent node, and the base station 1 to the base station 3 serve as receiving and sending measurement nodes to form three sensing links, namely, sensing links 1 to 3. The first sensed point is a sensed point whose sequence number is 8 in the target region, the sensing link matching the first sensed point is the sensing link 1 including the base station 1, and the first sensing link is the sensing link 2 including the base station 2.

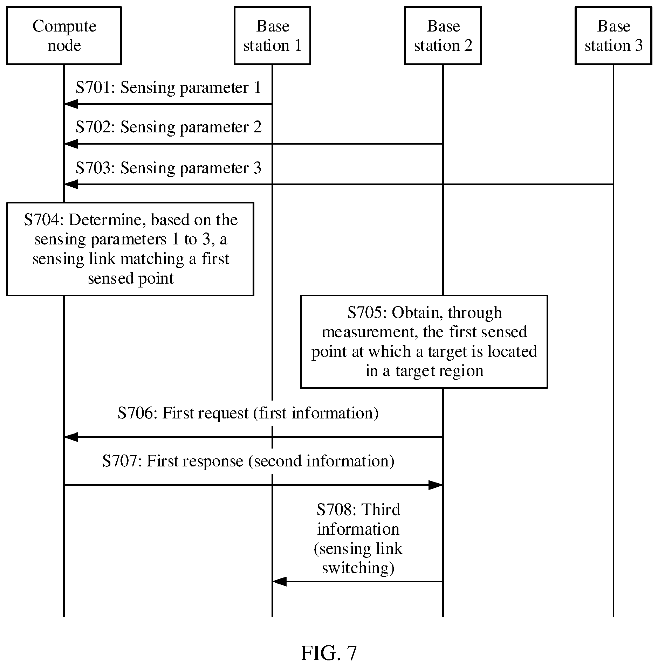

For example, FIG. 7 is a schematic flowchart of a multi-node joint sensing method according to an embodiment of this application. As shown in FIG. 7, the method includes the following steps.

S701: A base station 1 sends a sensing parameter 1 to a compute node. Correspondingly, the compute node receives the sensing parameter 1 from the base station 1.

The sensing parameter 1 includes a first sensing parameter and a second sensing parameter of the base station 1 respectively with respect to 24 sensed points in a target region. In other words, the sensing parameter 1 includes a first sensing parameter and a second sensing parameter of the base station 1 with respect to a first sensed point. For specific descriptions of the first sensing parameter and the second sensing parameter, refer to related descriptions in S401. Details are not described herein again.

S702: A base station 2 sends a sensing parameter 2 to the compute node. Correspondingly, the compute node receives the sensing parameter 2 from the base station 2.

S703: A base station 3 sends a sensing parameter 3 to the compute node. Correspondingly, the compute node receives the sensing parameter 3 from the base station 3.

For specific descriptions of the sensing parameter 2 and the sensing parameter 3, refer to related descriptions of the sensing parameter 1 in S701. Details are not described herein again.

S704: The compute node determines, based on the sensing parameters 1 to 3, a sensing link matching the first sensed point.

For example, the compute node may determine, based on a computation manner in S401, a sensing link matching each sensed point in the target region, and a correspondence between the sensed point and the matched sensing link may be shown in Table 1. Therefore, the compute node may determine, based on the sensing parameters 1 to 3, that the sensing link matching the first sensed point is a sensing link including the base station 1.

For a specific implementation process of S704, refer to the related descriptions in S401. Details are not described herein again.

S705: The base station 2 obtains, through measurement, the first sensed point at which a target is located in a target region.

In other words, the base station 2 obtains, through measurement by using the sensing link 2, the first sensed point at which the target is located in the target region.

S706: The base station 2 sends a first request to the compute node. Correspondingly, the compute node receives the first request from the base station 2.

The first request is used to request the compute node to determine whether the sensing link 2 for measuring the first sensed point is the sensing link matching the first sensed point. The first request includes first information, and the first information includes an ID of the sensing link 2 and an ID of the first sensed point. For specific descriptions of the first information, refer to the specific descriptions of the first information in S401. Details are not described again.

After receiving the first information, the compute node may determine, based on the first information, that the sensing link matching the first sensed point is the sensing link 1 from a correspondence between each sensed point and a matched sensing link, and may further determine quality of sensing of the first sensed point with respect to the sensing link 1 and quality of sensing of the first sensed point with respect to the sensing link 2.

S707: The compute node sends a first response to the base station 2. Correspondingly, the base station 2 receives the first response from the compute node.

The first response indicates to switch to the sensing link 2, that is, indicates that the sensing link 2 is not the sensing link matching the first sensed point. The first response may include second information. The second information may include an ID of the sensing link 1, quality of sensing of the first sensed point with respect to the sensing link 1, an ID of the sensing link 2, and quality of sensing of the first sensed point with respect to the sensing link 2. For specific descriptions of the second information, refer to the specific descriptions of the second information in S403. Details are not described again.

S708: The base station 2 sends third information to the base station 1. Correspondingly, the base station 1 receives the third information from the base station 2.

The third information indicates the base station 1 to measure the target located at the first sensed point.

After receiving the first response, the base station 2 may determine, based on the second information, that the sensing link 2 used by the base station 2 to measure the first sensed point is not the sensing link matching the first sensed point, and therefore send the third information to the base station 1, to switch measurement of the target located at the first sensed point from the sensing link 2 to the sensing link 1, in other words, enable the base station 1 to be used for measuring the target located at the first sensed point.

Therefore, in a scenario of multi-base station joint sensing, each base station may learn, from the compute node, whether a sensing resolution and sensing accuracy that are achieved by the base station by measuring a current sensed point are high. If the sensing resolution and the sensing accuracy that are achieved by measuring the current sensed point cannot be high, the base station may switch, based on feedback of the compute node, to a base station that can achieve a high sensing resolution and high sensing accuracy for measurement. This can enhance a sensing resolution and sensing accuracy of a sensing result.

For example, in a scenario using a sensing mode in which a terminal performs sending and a base station performs receiving, the target region is obtained through division in a manner shown in FIG. 6. The compute node is an independent node, a terminal 1 and a terminal 2 serve as two sending measurement nodes, and a base station 1 to a base station 3 serve as three receiving measurement nodes. The terminal 1 and the base station 1 form a sensing link 1, the terminal 1 and the base station 2 form a sensing link 2, the terminal 1 and the base station 3 form a sensing link 3, the terminal 2 and the base station 1 form a sensing link 4, the terminal 2 and the base station 2 form a sensing link 5, and the terminal 2 and the base station 3 form a sensing link 6. The first sensed point is a sensed point whose sequence number is 8 in the target region, the first sensing link is the sensing link 1, and the sensing link matching the first sensed point is the sensing link 2.

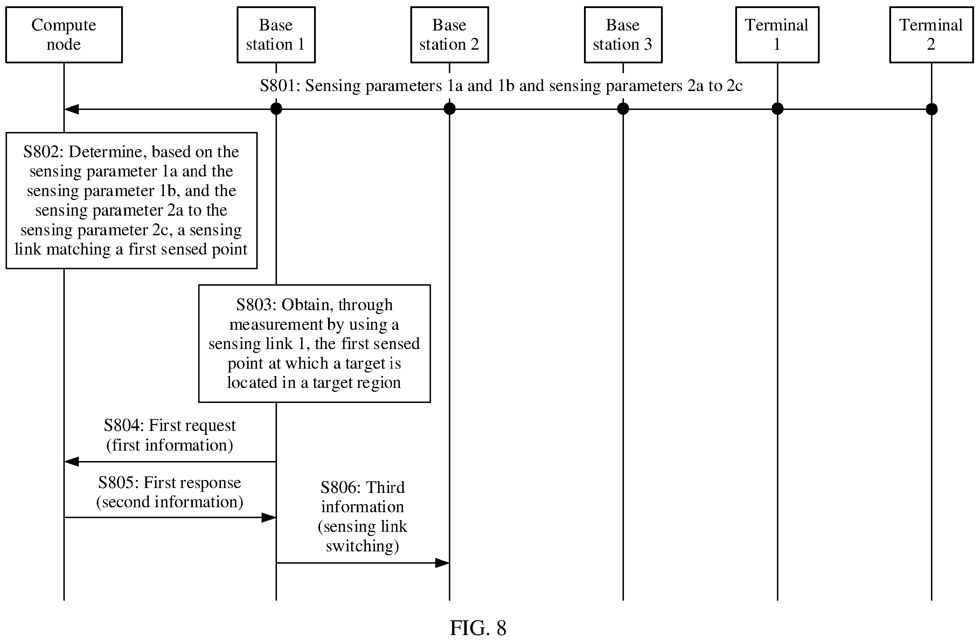

For example, FIG. 8 is a schematic flowchart of a multi-node joint sensing method according to an embodiment of this application. As shown in FIG. 8, the method includes the following steps.

S801: A compute node separately receives a sensing parameter 1a and a sensing parameter 1b from a terminal 1 and a terminal 2, and separately receives a sensing parameter 2a to a sensing parameter 2c from a base station 1 to a base station 3.

The sensing parameter 1a includes a first sensing resolution unit area of the terminal 1 respectively with respect to 24 sensed points in a target region. The sensing parameter 1b includes a first sensing resolution unit area of the terminal 2 respectively with respect to the 24 sensed points in the target region. The sensing parameter 2a includes a second sensing resolution unit area of the base station 1 respectively with respect to the 24 sensed points in the target region, an SINR of the sensing link 1, and an SINR of the sensing link 4. The sensing parameter 2b includes a second sensing resolution unit area of the base station 2 respectively with respect to the 24 sensed points in the target region, an SINR of the sensing link 2, and an SINR of the sensing link 5. The sensing parameter 2c includes a second sensing resolution unit area of the base station 3 respectively with respect to the 24 sensed points in the target region, an SINR of the sensing link 3, and an SINR of the sensing link 6.

For specific descriptions of the first sensing resolution unit area, the second sensing resolution unit area, and the SINR, refer to related descriptions of the first sensing parameter and the second sensing parameter in S401. Details are not described again.

S802: The compute node determines, based on the sensing parameter 1a and the sensing parameter 1b, and the sensing parameter 2a to the sensing parameter 2c, a sensing link matching a first sensed point.

For example, the compute node may determine, based on a computation manner in S401, a sensing link matching each sensed point in the target region, and a correspondence between the sensed point and the matched sensing link may be shown in Table 2. Therefore, the compute node may determine, based on the sensing parameters 1a and 1b and 2a to 2c, that the sensing link matching the first sensed point is the sensing link 2 including the terminal 1 and the base station 2.

For a specific implementation process of S802, refer to the related descriptions in S401. Details are not described herein again.

S803: The base station 1 obtains, through measurement by using the sensing link 1, the first sensed point at which the target is located in the target region.

S804: The base station 1 sends a first request to the compute node. Correspondingly, the compute node receives the first request from the base station 1.

The first request is used to request the compute node to determine whether the sensing link 1 for measuring the first sensed point is the sensing link matching the first sensed point. The first request includes first information, and the first information includes an ID of the sensing link 1 and an ID of the first sensed point. For specific descriptions of the first information, refer to the specific descriptions of the first information in S401. Details are not described again.

After receiving the first information, the compute node may determine, based on the first information, that the sensing link matching the first sensed point is the sensing link 2 from a correspondence between each sensed point and a matched sensing link, and may further determine quality of sensing of the first sensed point with respect to the sensing link 1 and quality of sensing of the first sensed point with respect to the sensing link 2.

S805: The compute node sends a first response to the base station 1. Correspondingly, the base station 1 receives the first response from the compute node.

The first response indicates to switch to the sensing link 1, that is, indicates that the sensing link 1 is not the sensing link matching the first sensed point. The first response may include second information. The second information may include an ID of the sensing link 1, quality of sensing of the first sensed point with respect to the sensing link 1, an ID of the sensing link 2, and quality of sensing of the first sensed point with respect to the sensing link 2. For specific descriptions of the second information, refer to the specific descriptions of the second information in S403. Details are not described again.

S806: The base station 1 sends third information to the base station 2. Correspondingly, the base station 2 receives the third information from the base station 1.

The third information indicates the base station 2 to measure the target located at the first sensed point.

After receiving the first response, the base station 1 may determine, based on the second information, that the sensing link 1 used by the base station 1 to measure the first sensed point is not the sensing link matching the first sensed point, and determine, based on the sensing link 2 matching the first sensed point, that a receiving measurement node needs to be switched and a sending measurement node does not need to be switched (in other words, the terminal 1 does not need to be switched). Therefore, the base station 1 sends the third information to the base station 2, to switch measurement of the target located at the first sensed point from the sensing link 1 to the sensing link 2. In other words, the base station 2 measures, based on the sensing signal sent by the terminal 1, the target located at the first sensed point.

Therefore, in a scenario of joint sensing by a plurality of base stations and a plurality of terminals, a base station that performs receiving measurement may learn, from the compute node, whether a sensing link for current measurement can achieve a high sensing resolution and high sensing accuracy for measurement of a current sensed point. If the current sensing link cannot achieve the high sensing resolution and high sensing accuracy for the measurement of the current sensed point, the base station that performs receiving measurement may switch, based on feedback of the compute node, to a sensing link that can achieve a high sensing resolution and high sensing accuracy for measurement. This can enhance a sensing resolution and sensing accuracy of a sensing result.

It should be understood that the scenario shown in FIG. 8 shows a process of switching a receiving measurement node to complete sensing link switching. In some scenarios, sensing link switching may be completed by switching a sending measurement node or switching both a receiving measurement node and a sending measurement node. For example, a receiving measurement node that initiates a request, namely, a source receiving measurement node (for example, the base station 1), may send second information to a source sending measurement node (for example, the terminal 1), to indicate the source sending measurement node to initiate sending measurement node switching. For example, the terminal 1 sends fourth information to the terminal 2, to indicate the terminal 2 to measure the first sensed point. This is not limited.

In the scenario shown in FIG. 8, in addition to a sensing mode in which a terminal performs sending and a base station performs receiving, the base station may also perform sensing in a self-sending and self-receiving mode. In other words, the base station 1 to the base station 3 further respectively form three sensing links in self-sending and self-receiving. In this scenario, for example, a sensing link matching the first sensed point is a sensing link including the base station 2 that performs sending and receiving. In this case, functions of the third information and the fourth information are equivalent. In other words, the base station 1 may send the third information or the fourth information to the base station 2. This is not limited.

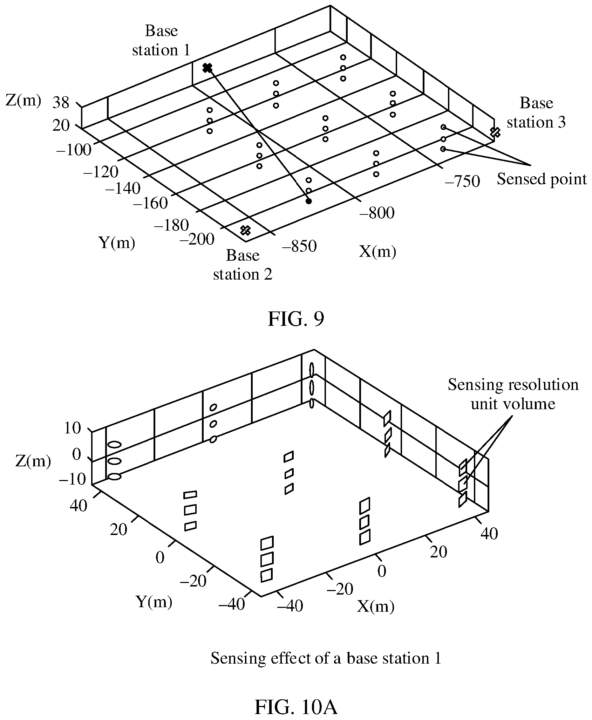

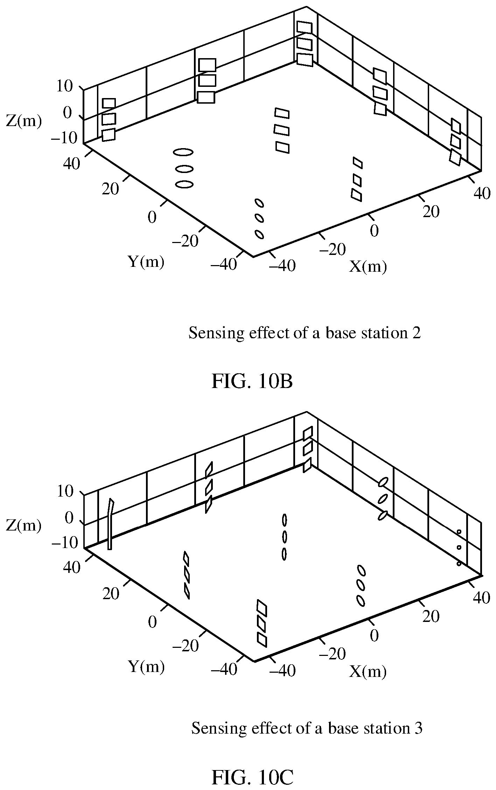

The following describes technical effects achieved by the method provided in this embodiment of this application in combination with simulation scenarios and simulation results shown in FIG. 9 and FIG. 10A to FIG. 10D.

In the simulation scenario shown in FIG. 9, three base stations (the base station 1 to the base station 3) measure 27 sensed points in the target region. A center frequency of the base station is 10 gigahertz (giga hertz, GHz), a bandwidth is 400 megahertz (mega hertz, MHz), a quantity of array elements of an antenna array deployed in the base station is 67 × 34, and the array elements are evenly arranged at a spacing of 1.5 centimeters (centimeter, cm) (half wavelength).

FIG. 10A to FIG. 10C respectively show sensing effects obtained by the base station 1 to the base station 3 by measuring the sensed points in the entire target region, as shown in FIG. 10A to FIG. 10C. In sensing resolution unit volumes obtained by a single base station by sensing the 27 sensed points in the target region, only a small quantity of sensed points correspond to a small sensing resolution unit volume, and a large quantity of sensed points correspond to a large sensing resolution unit volume. In other words, a sensing resolution achieved by measurement of a small quantity of sensed points can be high, and a sensing resolution effect achieved by measurement of a large quantity of sensed points is poor.

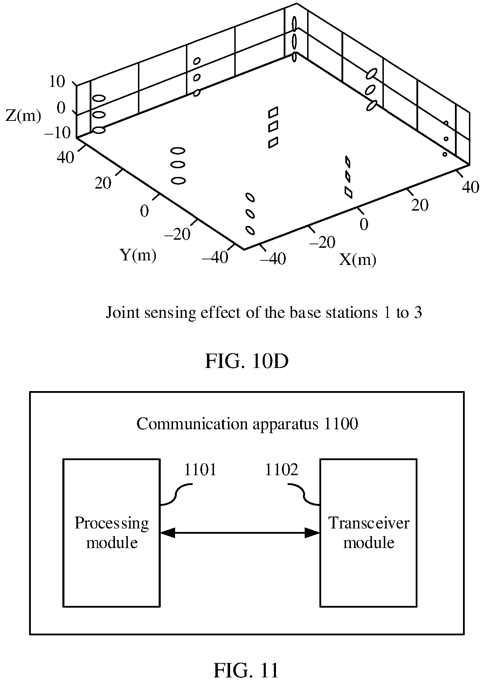

FIG. 10D shows a sensing effect of joint sensing performed by the base station 1 to the base station 3 based on the multi-node joint sensing method provided in this embodiment of this application, as shown in FIG. 10D. Sizes of sensing resolution unit volumes obtained by sensing the 27 sensed points in the target region through joint sensing in this application are all small, so that a high sensing resolution can be achieved in the entire target region.

It can be learned that a single base station can achieve a high sensing resolution by measuring a small quantity of sensed points in the target region, but a sensing resolution effect achieved by measuring a large quantity of sensed points is low. However, a high sensing resolution can be achieved in the entire target region through joint sensing, and the sensing resolution is higher than that achieved by the single base station.

It may be understood that, in the foregoing embodiments, the method and/or steps implemented by the compute node may alternatively be implemented by a part (for example, a processor, a chip, a chip system, a circuit, a logical module, or software) that can be used in the compute node. The method and/or steps implemented by the sending measurement node may alternatively be implemented by a part (for example, a processor, a chip, a chip system, a circuit, a logical module, or software) that can be used in the sending measurement node. The method and/or steps implemented by the receiving measurement node may alternatively be implemented by a part (for example, a processor, a chip, a chip system, a circuit, a logical module, or software) that can be used in the receiving measurement node.

The foregoing mainly describes the solutions provided in this application. Correspondingly, this application further provides a communication apparatus. The communication apparatus is configured to implement the methods in the foregoing method embodiments. The communication apparatus may be the compute node in the foregoing method embodiments, an apparatus including the compute node, or a part that may be used in the compute node, for example, a chip or a chip system. Alternatively, the communication apparatus may be the sending measurement node in the foregoing method embodiments, an apparatus including the sending measurement node, or a part that may be used in the sending measurement node, for example, a chip or a chip system. Alternatively, the communication apparatus may be the receiving measurement node in the foregoing method embodiments, an apparatus including the receiving measurement node, or a part that may be used in the receiving measurement node, for example, a chip or a chip system.

It may be understood that, to implement the foregoing functions, the communication apparatus includes corresponding hardware structures and/or software modules for performing the functions. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraint conditions of the technical solutions. A person skilled in the art may use different methods to implement the described functions for each particular application, but it should not be considered that the implementation goes beyond the scope of this application.

In embodiments of this application, the communication apparatus may be divided into functional modules based on the foregoing method embodiments. For example, each functional module may be obtained through division based on each corresponding function, or two or more functions may be integrated into one processing module. The integrated module may be implemented in a form of hardware, or may be implemented in a form of software functional module. It should be noted that, in embodiments of this application, module division is an example, and is merely a logical function division. In actual implementation, another division manner may be used.

For example, the communication apparatus is the compute node, the sending measurement node, or the receiving measurement node in the foregoing method embodiments. FIG. 11 is a diagram of a structure of a communication apparatus according to an embodiment of this application. As shown in FIG. 11, the communication apparatus 1100 includes a processing module 1101 and a transceiver module 1102. The processing module 1101 is configured to perform a processing function of the compute node, the sending measurement node, or the receiving measurement node in the foregoing method embodiments. The transceiver module 1102 is configured to perform receiving and sending functions of the compute node, the sending measurement node, or the receiving measurement node in the foregoing method embodiments.

All related content of the steps in the foregoing method embodiments may be cited in function descriptions of the corresponding functional modules. Details are not described herein again.

Because the communication apparatus 1100 provided in this embodiment may perform the foregoing methods, for a technical effect that can be obtained by the communication apparatus 1100, refer to the foregoing method embodiments. Details are not described herein again.

In a possible design solution, in this embodiment of this application, the transceiver module 1102 may include a receiving module and a sending module (not shown in FIG. 11). The transceiver module is configured to implement the sending function and the receiving function of the communication apparatus 1100.

In a possible design solution, the communication apparatus 1100 may further include a storage module (not shown in FIG. 11), and the storage module stores a program or instructions. When the processing module 1101 executes the program or the instructions, the communication apparatus 1100 is enabled to perform a function of the compute node, the sending measurement node, or the receiving measurement node in the method shown in FIG. 4.

It should be understood that the processing module 1101 in the communication apparatus 1100 may be implemented by a processor or a processor-related circuit component, and may be a processor or a processing unit. The transceiver module 1102 may be implemented by a transceiver or a transceiver-related circuit component, and may be a transceiver or a transceiver unit.

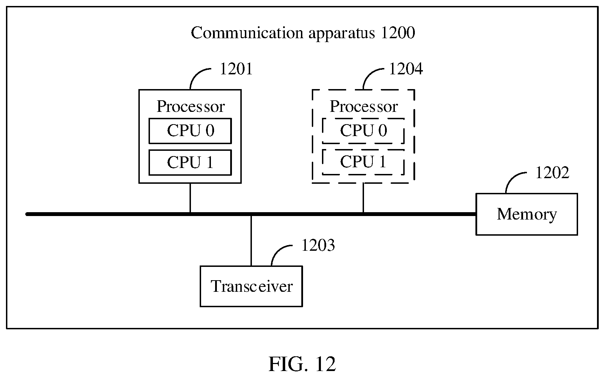

For example, FIG. 12 is a diagram of a structure of another communication apparatus according to an embodiment of this application. The communications apparatus may be a compute node, a sending measurement node, or a receiving measurement node, or may be a chip (system) or another component or part that may be disposed in a network device or a terminal device. As shown in FIG. 12, the communication apparatus 1200 may include a processor 1201. In a possible design solution, the communication apparatus 1200 may further include a memory 1202 and/or a transceiver 1203. The processor 1201 is coupled to the memory 1202 and the transceiver 1203, for example, may be connected to the memory 1202 and the transceiver 1203 through a communication bus.

The following describes in detail each component of the communication apparatus 1200 with reference to FIG. 12.

The processor 1201 is a control center of the communication apparatus 1200, and may be a processor or a generic term of a plurality of processing elements. For example, the processor 1201 is one or more central processing units (central processing units, CPUs), may be an application-specific integrated circuit (application-specific integrated circuit, ASIC), or is configured as one or more integrated circuits for implementing embodiments of this application, for example, one or more microprocessors (digital signal processors, DSPs) or one or more field programmable gate arrays (field programmable gate arrays, FPGAs).

In a possible design solution, the processor 1201 may perform various functions of the communication apparatus 1200 by running or executing a software program stored in the memory 1202 and invoking data stored in the memory 1202.

In a specific implementation, in an embodiment, the processor 1201 may include one or more CPUs, for example, a CPU 0 and a CPU 1 shown in FIG. 12.

During specific implementation, in an embodiment, the communication apparatus 1200 may also include a plurality of processors, for example, the processor 1201 and a processor 1204 shown in FIG. 12. Each of the processors may be a single-core processor (single-CPU), or may be a multi-core processor (multi-CPU). The processor herein may be one or more devices, circuits, and/or processing cores configured to process data (for example, computer program instructions).

The memory 1202 is configured to store the software program for performing the solutions in this application, and the processor 1201 controls execution. For a specific implementation, refer to the foregoing method embodiments. Details are not described herein again.

In a possible design solution, the memory 1202 may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, or the like), a magnetic disk storage medium or another magnetic storage device, or any other medium that can be used to carry or store expected program code in a form of instruction or data structure and that can be accessed by a computer. However, this is not limited thereto. The memory 1202 may be integrated with the processor 1201, or may exist independently, and is coupled to the processor 1201 through an interface circuit (not shown in FIG. 12) of the communication apparatus 1200. This is not specifically limited in embodiments of this application.

The transceiver 1203 is configured for communication with another communication apparatus. For example, the communication apparatus 1200 is a terminal device, and the transceiver 1203 may be configured to communicate with an access network device or communicate with another terminal device. For another example, the communication apparatus 1200 is a network device, and the transceiver 1203 may be configured to communicate with a terminal device or communicate with another network device.

In a possible design solution, the transceiver 1203 may include a receiver and a transmitter (not separately shown in FIG. 12). The receiver is configured to implement a receiving function, and the transmitter is configured to implement a sending function.

In a possible design solution, the transceiver 1203 may be integrated with the processor 1201, or may exist independently, and is coupled to the processor 1201 through an interface circuit (not shown in FIG. 12) of the communication apparatus 1200. This is not specifically limited in embodiments of this application.

It should be noted that the structure of the communication apparatus 1200 shown in FIG. 12 does not constitute a limitation on the communication apparatus. An actual communication apparatus may include more or fewer parts than those shown in the figure, combine some parts, or have different part arrangements.

In addition, for a technical effect of the communication apparatus 1200, refer to the technical effect of the methods in the foregoing method embodiments. Details are not described herein again.

An embodiment of this application further provides a computer-readable storage medium storing a computer program or instructions. When the computer program or instructions are executed by a computer, functions in the foregoing method embodiments are implemented.

An embodiment of this application further provides a computer program product. When the computer program product is executed by a computer, functions in the foregoing method embodiments are implemented.

All or a part of the foregoing embodiments may be implemented by using software, hardware, firmware, or any combination thereof. When a software program is used to implement embodiments, embodiments may be implemented completely or partially in a form of computer program product. The computer program product includes one or more computer instructions. When the computer program instructions are loaded and executed on a computer, all or some of the procedures or functions according to embodiments of this application are generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, like a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual requirements to achieve the objectives of the solutions of embodiments.

In addition, functional units in embodiments of this application may be integrated into one processing unit, or each of the units may exist alone physically, or two or more units may be integrated into one unit.

When the functions are implemented in the form of software functional unit and sold or used as an independent product, the functions may be stored in a computer-readable storage medium. Based on such an understanding, technical solutions of this application essentially, or the part contributing to the prior art, or some of the technical solutions may be implemented in a form of software product. The computer software product is stored in a storage medium, and includes a plurality of instructions for instructing a computer device (which may be a personal computer, a server, or an access network device) to perform all or some of the steps of the methods described in embodiments of this application. The foregoing storage medium includes any medium that can store program code, like a USB flash drive, a removable hard disk, a read-only memory (read-only memory, ROM), a random access memory (random access memory, RAM), a magnetic disk, or an optical disc.

Although this application is described with reference to embodiments, in a process of implementing this application that claims protection, a person skilled in the art may understand and implement another variation of the disclosed embodiments by viewing the accompanying drawings, disclosed content, and the accompanying claims. In the claims, "comprising" (comprising) does not exclude another component or another step, and "a" or "one" does not exclude a case of multiple. A single processor or another unit may implement several functions enumerated in the claims. Some measures are recorded in dependent claims that are different from each other, but this does not mean that these measures cannot be combined to produce a better effect.

Although this application is described in combination with specific features and embodiments thereof, it is clear that various modifications and combinations may be made to them without departing from the spirit and scope of this application. Correspondingly, the specification and accompanying drawings are merely example description of this application defined by the accompanying claims, and are considered as any of or all modifications, variations, combinations or equivalents that cover the scope of this application. It is clearly that a person skilled in the art can make various modifications and variations to this application without departing from the spirit and scope of this application. This application is intended to cover these modifications and variations of this application provided that they fall within the scope of protection defined by the following claims and their equivalent technologies.

## Claims

1. A multi-node joint sensing method, wherein the method comprises:
obtaining first information, wherein the first information indicates a first receiving measurement node to request to determine whether a first sensing link is a sensing link matching a first sensed point, the first sensing link is a sensing link comprising a first sending measurement node and the first receiving measurement node, the first sensing link is one of K sensing links, the K sensing links comprise N sending measurement nodes and M receiving measurement nodes, K is less than or equal to N×M or K is equal to M, and N is an integer greater than 1 and M is a positive integer, or N is a positive integer and M is an integer greater than 1, or N=M and is an integer greater than 1; and
determining, based on the first information, whether to switch the first sensing link for measuring the first sensed point.

2. The method according to claim 1, wherein when K is equal to M, the N sending measurement nodes are the M receiving measurement nodes; or
when K is less than or equal to N×M, the N sending measurement nodes are different from the M receiving measurement nodes.

3. The method according to claim 1 or 2, wherein the method further comprises:
sending second information, wherein the second information indicates whether to switch the first sensing link for measuring the first sensed point.

4. The method according to claim 3, wherein the second information comprises information indicating the sensing link matching the first sensed point.

5. The method according to any one of claims 1 to 4, wherein at least one sensed point matching the first sensing link forms a sub-region within a target region, and the sub-region is provided with a measurement service by the first sensing link.

6. The method according to any one of claims 1 to 5, wherein the sensing link matching the first sensed point is determined from the K sensing links based on a first sensing parameter respectively corresponding to the N sending measurement nodes and a second sensing parameter respectively corresponding to the M receiving measurement nodes, the first sensing parameter corresponding to the first sending measurement node comprises a first sensing resolution unit area of the first sensed point with respect to the first sending measurement node, and the second sensing parameter corresponding to the first receiving measurement node comprises a second sensing resolution unit area of the first sensed point with respect to the first receiving measurement node and status information of the first sensing link.

7. The method according to claim 6, wherein the first sensing resolution unit area of the first sensed point with respect to the first sending measurement node and the second sensing resolution unit area of the first sensed point with respect to the first receiving measurement node are used to determine a sensing resolution unit volume of the first sensed point with respect to the first sensing link.

8. The method according to claim 6 or 7, wherein the status information of the first sensing link is used to determine sensing accuracy of the first sensed point with respect to the first sensing link.

9. The method according to any one of claims 6 to 8, wherein the method further comprises:
obtaining the first sensing parameter respectively corresponding to the N sending measurement nodes and the second sensing parameter respectively corresponding to the M receiving measurement nodes.

10. The method according to any one of claims 6 to 9, wherein that the sensing link matching the first sensed point is determined from the K sensing links based on the first sensing parameter respectively corresponding to the N sending measurement nodes and the second sensing parameter respectively corresponding to the M receiving measurement nodes comprises:
the sensing link matching the first sensed point is determined based on a sensing resolution unit volume of the first sensed point respectively with respect to the K sensing links and status information of the K sensing links, wherein the sensing resolution unit volume of the first sensed point with respect to the first sensing link is determined based on the first sensing resolution unit area of the first sensed point with respect to the first sending measurement node and the second sensing resolution unit area of the first sensed point with respect to the first receiving measurement node, and the sensing accuracy of the first sensed point with respect to the first sensing link is determined based on the sensing resolution unit volume of the first sensed point with respect to the first sensing link and the status information of the first sensing link.

11. The method according to claim 10, wherein that the sensing link matching the first sensed point is determined based on the sensing resolution unit volume of the first sensed point respectively with respect to the K sensing links and the status information of the K sensing links comprises:
the sensing link matching the first sensed point is determined based on K weighted values, the K weighted values are determined based on the sensing resolution unit volume and sensing accuracy of the first sensed point respectively with respect to the K sensing links, a weighted value of the first sensed point with respect to the first sensing link in the K weighted values is determined based on the sensing resolution unit volume of the first sensed point with respect to the first sensing link and the sensing accuracy of the first sensed point with respect to the first sensing link, and a weighted value corresponding to the sensing link matching the first sensed point is a smallest value in the K weighted values.

12. The method according to claim 11, wherein the weighted value of the first sensed point with respect to the first sensing link in the K weighted values satisfies the following relationship: ${Δ}_{n , m}^{i} = {w}_{k} ⋅ {v}_{n , m}^{i} + Var \left({v}_{n , m}^{i}\right)$, wherein i is a sequence number of the first sensed point, ${Δ}_{n , m}^{i}$ is the weighted value of the first sensed point with respect to the first sensing link, ${v}_{n , m}^{i}$ is the sensing resolution unit volume of the first sensed point with respect to the first sensing link, $Var \left({v}_{n , m}^{i}\right)$ is the sensing accuracy of the first sensed point with respect to the first sensing link, *wₖ* is a weighting coefficient, n is a sequence number of the first sending measurement node in the N sending measurement nodes, 1≤n≤N, m is a sequence number of the first receiving measurement node in the M receiving measurement nodes, 1≤m≤M, and i, n, and m are integers.

13. The method according to claim 11, wherein the sensing resolution unit volume of the first sensed point with respect to the first sensing link satisfies the following relationship: ${v}_{n , m}^{i} = \frac{{S}_{tx}^{i} \left(n\right) ⋅ {S}_{rx}^{i} \left(m\right)}{{δ}_{r}}$ , wherein ${v}_{n , m}^{i}$ is the sensing resolution unit volume of the first sensed point with respect to the first sensing link, ${S}_{tx}^{i} \left(n\right)$ is the first sensing resolution unit area of the first sensed point with respect to the first sending measurement node, ${S}_{rx}^{i} \left(m\right)$ is the second sensing resolution unit area of the first sensed point with respect to the first receiving measurement node, and ***δᵣ*** is a range resolution.

14. The method according to claim 12 or 13, wherein the sensing accuracy of the first sensed point with respect to the first sensing link satisfies the following relationship: $Var \left({v}_{n , m}^{i}\right) = \frac{{v}_{n , m}^{i}}{\sqrt{{SNR}_{n \to m}^{i}}}$, wherein ${SNR}_{n \to m}^{i}$ is the status information of the first sensing link.

15. The method according to claim 13 or 14, wherein the first sensing resolution unit area of the first sensed point with respect to the first sending measurement node satisfies the following relationship: ${S}_{tx}^{i} \left(n\right) = sin \left(\vec{A}, \vec{{R}_{tx , n}^{i}}\right) ⋅ {R}_{tx , n}^{i} ⋅ {δ}_{r} ⋅ {δ}_{a}$, wherein ***̅A̅*̅** is an azimuth unit vector, $\vec{{R}_{tx , n}^{i}}$ is a vector from the first sending measurement node to the first sensed point, ${R}_{tx , n}^{i}$ is a modulus value of $\vec{{R}_{tx , n}^{i}}$, ***δᵣ*** is the range resolution, and ***δₐ*** is an azimuth angle resolution.

16. The method according to any one of claims 13 to 15, wherein the second sensing resolution unit area of the first sensed point with respect to the first receiving measurement node satisfies the following relationship: ${S}_{rx}^{i} \left(m\right) = sin \left(\vec{E}, \vec{{R}_{rx , m}^{i}}\right) ⋅ {R}_{rx , m}^{i} ⋅ {δ}_{r} ⋅ {δ}_{e}$, wherein E is an elevation vector, $\vec{{R}_{r x , m}^{i}}$ is a vector from the first receiving measurement node to the first sensed point, ${R}_{rx , m}^{i}$ is a modulus of $\vec{{R}_{r x , m}^{i}}$, ***δᵣ*** is the range resolution, and ***δₑ*** is an elevation angular resolution.

17. A multi-node joint sensing method, wherein the method is applied to a first sending measurement node in N sending measurement nodes or a first receiving measurement node in M receiving measurement nodes, and the method comprises:
determining whether to switch a first sensing link for measuring a first sensed point, wherein the first sensing link is a sensing link comprising the first sending measurement node and the first receiving measurement node, the first sensing link is one of K sensing links, the K sensing links comprise the N sending measurement nodes and the M receiving measurement nodes, K is less than or equal to N×M or K is equal to M, and N is an integer greater than 1 and M is a positive integer, or N is a positive integer and M is an integer greater than 1; and
when it is determined to skip switching the first sensing link for measuring the first sensed point, measuring a target located at the first sensed point.

18. The method according to claim 17, wherein when K is equal to M, the N sending measurement nodes are the M receiving measurement nodes; or
when K is less than or equal to N×M, the N sending measurement nodes are different from the M receiving measurement nodes.

19. The method according to claim 17 or 18, wherein determining whether to switch the first sensing link for measuring the first sensed point comprises:
obtaining second information, wherein the second information indicates whether to switch the first sensing link for measuring the first sensed point; and
determining, based on the second information, whether to switch the first sensing link for measuring the first sensed point.

20. The method according to claim 19, wherein the method further comprises:
receiving the second information.

21. The method according to claim 19 or 20, wherein the second information comprises information indicating a sensing link matching the first sensed point.

22. The method according to any one of claims 17 to 21, wherein the method is applied to the first sending measurement node, and the method further comprises:
sending a first sensing parameter corresponding to the first sending measurement node, wherein the first sensing parameter corresponding to the first sending measurement node comprises a first sensing resolution unit area of the first sensed point with respect to the first sending measurement node in a target region, and the first sensing parameter is used to determine the sensing link matching the first sensed point.

23. The method according to claim 22, wherein the method further comprises:
when it is determined to switch the first sensing link for measuring the first sensed point, determining, based on the sensing link matching the first sensed point, that the first sending measurement node is a sending measurement node that does not belong to the sensing link matching the first sensed point; and
sending third information to a sending measurement node on the sensing link matching the first sensed point, wherein the third information indicates the sending measurement node that belongs to the sensing link matching the first sensed point to measure the first sensed point.

24. The method according to any one of claims 17 to 21, wherein the method is applied to the first receiving measurement node, and the method further comprises:
sending first information, wherein the first information indicates the first receiving measurement node to request to determine whether the first sensing link is the sensing link matching the first sensed point.

25. The method according to claim 24, wherein the method further comprises:
sending a second sensing parameter corresponding to the first receiving measurement node, wherein the second sensing parameter corresponding to the first receiving measurement node comprises a second sensing resolution unit area of the first sensed point with respect to the first receiving measurement node and status information of the first sensing link, and the second sensing parameter is used to determine the sensing link matching the first sensed point.

26. The method according to claim 24 or 25, wherein the method further comprises:
when it is determined to switch the first sensing link for measuring the first sensed point, determining, based on the sensing link matching the first sensed point, that the first receiving measurement node is a receiving measurement node that does not belong to the sensing link matching the first sensed point; and
sending fourth information to a receiving measurement node corresponding to the sensing link matching the first sensed point, wherein the fourth information indicates the receiving measurement node that belongs to the sensing link matching the first sensed point to measure the first sensed point.

27. A communication apparatus, comprising a processing module, wherein
the processing module is configured to obtain first information, wherein the first information indicates a first receiving measurement node to request to determine whether a first sensing link is a sensing link matching a first sensed point, the first sensing link is a sensing link comprising a first sending measurement node and the first receiving measurement node, the first sensing link is one of K sensing links, the K sensing links comprise N sending measurement nodes and M receiving measurement nodes, K is less than or equal to N×M or K is equal to M, and N is an integer greater than 1 and M is a positive integer, or N is a positive integer and M is an integer greater than 1, or N=M and is an integer greater than 1; and
the processing module is further configured to: determine, based on the first information, whether to switch the first sensing link for measuring the first sensed point.

28. The apparatus according to claim 27, wherein when K is equal to M, the N sending measurement nodes are the M receiving measurement nodes; or
when K is less than or equal to N×M, the N sending measurement nodes are different from the M receiving measurement nodes.

29. The apparatus according to claim 27 or 28, wherein the apparatus further comprises a transceiver module, wherein
the transceiver module is configured to send second information, wherein the second information indicates whether to switch the first sensing link for measuring the first sensed point.

30. The apparatus according to claim 29, wherein the second information comprises information indicating the sensing link matching the first sensed point.

31. The apparatus according to any one of claims 27 to 30, wherein at least one sensed point matching the first sensing link forms a sub-region within a target region, and the sub-region is provided with a measurement service by the first sensing link.

32. The apparatus according to any one of claims 27 to 31, wherein the sensing link matching the first sensed point is determined from the K sensing links based on a first sensing parameter respectively corresponding to the N sending measurement nodes and a second sensing parameter respectively corresponding to the M receiving measurement nodes, the first sensing parameter corresponding to the first sending measurement node comprises a first sensing resolution unit area of the first sensed point with respect to the first sending measurement node, and the second sensing parameter corresponding to the first receiving measurement node comprises a second sensing resolution unit area of the first sensed point with respect to the first receiving measurement node and status information of the first sensing link.

33. The apparatus according to claim 32, wherein the first sensing resolution unit area of the first sensed point with respect to the first sending measurement node and the second sensing resolution unit area of the first sensed point with respect to the first receiving measurement node are used to determine a sensing resolution unit volume of the first sensed point with respect to the first sensing link.

34. The apparatus according to claim 32 or 33, wherein the status information of the first sensing link is used to determine sensing accuracy of the first sensed point with respect to the first sensing link.

35. The apparatus according to any one of claims 32 to 34, wherein the processing module is further configured to obtain the first sensing parameter respectively corresponding to the N sending measurement nodes and the second sensing parameter respectively corresponding to the M receiving measurement nodes.

36. The apparatus according to any one of claims 32 to 35, wherein that the sensing link matching the first sensed point is determined from the K sensing links based on the first sensing parameter respectively corresponding to the N sending measurement nodes and the second sensing parameter respectively corresponding to the M receiving measurement nodes comprises:
the sensing link matching the first sensed point is determined based on a sensing resolution unit volume of the first sensed point respectively with respect to the K sensing links and status information of the K sensing links, wherein the sensing resolution unit volume of the first sensed point with respect to the first sensing link is determined based on the first sensing resolution unit area of the first sensed point with respect to the first sending measurement node and the second sensing resolution unit area of the first sensed point with respect to the first receiving measurement node, and the sensing accuracy of the first sensed point with respect to the first sensing link is determined based on the sensing resolution unit volume of the first sensed point with respect to the first sensing link and the status information of the first sensing link.

37. The apparatus according to claim 36, wherein that the sensing link matching the first sensed point is determined based on the sensing resolution unit volume of the first sensed point respectively with respect to the K sensing links and the status information of the K sensing links comprises:
the sensing link matching the first sensed point is determined based on K weighted values, the K weighted values are determined based on the sensing resolution unit volume and sensing accuracy of the first sensed point respectively with respect to the K sensing links, a weighted value of the first sensed point with respect to the first sensing link in the K weighted values is determined based on the sensing resolution unit volume of the first sensed point with respect to the first sensing link and the sensing accuracy of the first sensed point with respect to the first sensing link, and a weighted value corresponding to the sensing link matching the first sensed point is a smallest value in the K weighted values.

38. The apparatus according to claim 37, wherein the weighted value of the first sensed point with respect to the first sensing link in the K weighted values satisfies the following relationship: ${Δ}_{n , m}^{i} = {w}_{k} ⋅ {v}_{n , m}^{i} + Var \left({v}_{n , m}^{i}\right)$, wherein i is a sequence number of the first sensed point, ${Δ}_{n , m}^{i}$ is the weighted value of the first sensed point with respect to the first sensing link, ${v}_{n , m}^{i}$ is the sensing resolution unit volume of the first sensed point with respect to the first sensing link, $Var \left({v}_{n , m}^{i}\right)$ is the sensing accuracy of the first sensed point with respect to the first sensing link, *wₖ* is a weighting coefficient, n is a sequence number of the first sending measurement node in the N sending measurement nodes, 1≤n≤N, m is a sequence number of the first receiving measurement node in the M receiving measurement nodes, 1≤m≤M, and i, n, and m are integers.

39. The apparatus according to claim 37, wherein the sensing resolution unit volume of the first sensed point with respect to the first sensing link satisfies the following relationship: ${v}_{n , m}^{i} = \frac{{S}_{tx}^{i} \left(m\right) ⋅ {S}_{rx}^{i} \left(m\right)}{{δ}_{r}}$ , wherein ${v}_{n , m}^{i}$ is the sensing resolution unit volume of the first sensed point with respect to the first sensing link, ${S}_{tx}^{i} \left(n\right)$ is the first sensing resolution unit area of the first sensed point with respect to the first sending measurement node, ${S}_{rx}^{i} \left(m\right)$ is the second sensing resolution unit area of the first sensed point with respect to the first receiving measurement node, and ***δᵣ*** is a range resolution.

40. The apparatus according to claim 38 or 39, wherein the sensing accuracy of the first sensed point with respect to the first sensing link satisfies the following relationship: $Var \left({v}_{n , m}^{i}\right) = \frac{{v}_{n , m}^{i}}{\sqrt{{SNR}_{n \to m}^{i}}}$ wherein ${SNR}_{n \to m}^{i}$ is the status information of the first sensing link.

41. The apparatus according to claim 39 or 40, wherein the first sensing resolution unit area of the first sensed point with respect to the first sending measurement node satisfies the following relationship: ${S}_{tx}^{i} \left(n\right) = sin \left(\vec{A}, \vec{{R}_{tx , n}^{i}}\right) ⋅ {R}_{tx , n}^{i} ⋅ {δ}_{r} ⋅ {δ}_{a}$, wherein ***̅A̅*̅** is an azimuth unit vector, $\vec{{R}_{tx , n}^{i}}$ is a vector from the first sending measurement node to the first sensed point, ${R}_{tx , n}^{i}$ is a modulus value of $\vec{{R}_{tx , n}^{i}}$, ***δᵣ*** is the range resolution, and ***δₐ*** is an azimuth angle resolution.

42. The apparatus according to any one of claims 39 to 41, wherein the second sensing resolution unit area of the first sensed point with respect to the first receiving measurement node satisfies the following relationship: ${S}_{rx}^{i} \left(m\right) = sin \left(\vec{E}, \vec{{R}_{r x , m}^{i}}\right) ⋅ {R}_{rx , m}^{i} ⋅ {δ}_{r} ⋅ {δ}_{e}$, wherein ***̅E̅*̅** is an elevation vector, $\vec{{R}_{r x , m}^{i}}$ is a vector from the first receiving measurement node to the first sensed point, ${R}_{rx , m}^{i}$ is a modulus of $\vec{{R}_{r x , m}^{i}}$, ***δᵣ*** is the range resolution, and ***δₑ*** is an elevation angular resolution.

43. A communication apparatus, wherein the apparatus is used for a first sending measurement node in N sending measurement nodes or a first receiving measurement node in M receiving measurement nodes, and comprises a processing module, wherein
the processing module is configured to determine whether to switch a first sensing link for measuring a first sensed point, wherein the first sensing link is a sensing link comprising the first sending measurement node and the first receiving measurement node, the first sensing link is one of K sensing links, the K sensing links comprise the N sending measurement nodes and the M receiving measurement nodes, K is less than or equal to N×M or K is equal to M, and N is an integer greater than 1 and M is a positive integer, or N is a positive integer and M is an integer greater than 1; and
the processing module is further configured to: when it is determined to skip switching the first sensing link for measuring the first sensed point, measure a target located at the first sensed point.

44. The apparatus according to claim 43, wherein when K is equal to M, the N sending measurement nodes are the M receiving measurement nodes; or
when K is less than or equal to N×M, the N sending measurement nodes are different from the M receiving measurement nodes.

45. The apparatus according to claim 43 or 44, wherein that the processing module is configured to determine whether to switch the first sensing link for measuring the first sensed point comprises:
the processing module is configured to obtain second information, wherein the second information indicates whether to switch the first sensing link for measuring the first sensed point; and
the processing module is further configured to: determine, based on the second information, whether to switch the first sensing link for measuring the first sensed point.

46. The apparatus according to claim 45, wherein the apparatus further comprises a transceiver module, wherein
the transceiver module is configured to receive the second information.

47. The apparatus according to claim 45 or 46, wherein the second information comprises information indicating a sensing link matching the first sensed point.

48. The apparatus according to any one of claims 43 to 47, wherein the apparatus is used for the first sending measurement node, and the apparatus further comprises the transceiver module, wherein
the transceiver module is configured to send a first sensing parameter corresponding to the first sending measurement node, wherein the first sensing parameter corresponding to the first sending measurement node comprises a first sensing resolution unit area of the first sensed point with respect to the first sending measurement node in a target region, and the first sensing parameter is used to determine the sensing link matching the first sensed point.

49. The apparatus according to claim 48, wherein
the processing module is further configured to: when it is determined to switch the first sensing link for measuring the first sensed point, determine, based on the sensing link matching the first sensed point, that the first sending measurement node is a sending measurement node that does not belong to the sensing link matching the first sensed point; and
the transceiver module is further configured to send third information to a sending measurement node on the sensing link matching the first sensed point, wherein the third information indicates the sending measurement node that belongs to the sensing link matching the first sensed point to measure the first sensed point.

50. The apparatus according to any one of claims 43 to 47, wherein the apparatus is used for the first receiving measurement node, and the apparatus further comprises the transceiver module, wherein
the transceiver module is configured to send first information, wherein the first information indicates the first receiving measurement node to request to determine whether the first sensing link is the sensing link matching the first sensed point.

51. The apparatus according to claim 50, wherein
the transceiver module is further configured to send a second sensing parameter corresponding to the first receiving measurement node, wherein the second sensing parameter corresponding to the first receiving measurement node comprises a second sensing resolution unit area of the first sensed point with respect to the first receiving measurement node and status information of the first sensing link, and the second sensing parameter is used to determine the sensing link matching the first sensed point.

52. The apparatus according to claim 50 or 51, wherein
the processing module is further configured to: when it is determined to switch the first sensing link for measuring the first sensed point, determine, based on the sensing link matching the first sensed point, that the first receiving measurement node is a receiving measurement node that does not belong to the sensing link matching the first sensed point; and
the transceiver module is further configured to send fourth information to a receiving measurement node corresponding to the sensing link matching the first sensed point, wherein the fourth information indicates the receiving measurement node that belongs to the sensing link matching the first sensed point to measure the first sensed point.

53. A communication apparatus, comprising a processor, wherein the processor is configured to run a computer program or instructions, so that the method according to any one of claims 1 to 16 or claims 17 to 26 is implemented.

54. A communication chip, wherein the communication chip stores instructions, and when the chip runs on a communication device, the method according to any one of claims 1 to 16 or claims 17 to 26 is implemented.

55. A computer-readable storage medium, wherein the storage medium stores a computer program or instructions, and when the computer program or the instructions are executed by a communication apparatus, the method according to any one of claims 1 to 16 or claims 17 to 26 is implemented.

56. A computer program product, comprising computer program code, wherein when the computer program code is run on a communication apparatus, the communication apparatus implements the method according to any one of claims 1 to 16 or claims 17 to 26.
